(19) **Europäisches Patentamt / European Patent Office / Office européen des brevets**

(11) **EP 4 598 143 A1**

(12) # EUROPEAN PATENT APPLICATION
published in accordance with Art. 153(4) EPC

(43) Date of publication:
06.08.2025  Bulletin 2025/32

(21) Application number: 23870831.7

(22) Date of filing: 26.09.2023

(51) International Patent Classification (IPC):
*H04W 52/02* (2009.01)

(52) Cooperative Patent Classification (CPC):
**H04W 52/02; H04W 72/04; H04W 76/28;**
**Y02D 30/70**

(86) International application number:
**PCT/CN2023/121618**

(87) International publication number:
**WO 2024/067603 (04.04.2024 Gazette 2024/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  30.09.2022  CN 202211217058

(71) Applicant: **Datang Mobile Communications**
**Equipment Co., Ltd.**
**Beijing 100085 (CN)**

(72) Inventors:
• **SU, Yuwan**
  **Beijing 100085 (CN)**
• **WANG, Jiaqing**
  **Beijing 100085 (CN)**
• **CHENG, Fangchen**
  **Beijing 100085 (CN)**
• **YANG, Meiying**
  **Beijing 100085 (CN)**
• **LUO, Chen**
  **Beijing 100085 (CN)**

(74) Representative: **Studio Torta S.p.A.**
**Via Viotti, 9**
**10121 Torino (IT)**

(54) **RESOURCE LOCATION DETERMINATION METHOD, AND DEVICE, APPARATUS AND STORAGE MEDIUM**

(57)    Provided in the embodiments of the present disclosure are a resource location determination method, and a device, an apparatus and a storage medium. The method comprises: determining the resource location(s) of one or more second signals according to the resource location and/or period of a first signal, wherein the first signal comprises a cell-level signal, a broadcast signal or a common signal.

```
            ( Start )
               |
┌──────────────────────────────────────────────┐
│ Determining a resource location of one or more │
│ second signals based on a resource location     │——— 100
│ and/or a cycle of a first signal, where the     │
│ first signal includes a cell-level signal, a    │
│ broadcast signal, or a public signal            │
└──────────────────────────────────────────────┘
               |
            ( End )
```

FIG. 1

EP 4 598 143 A1

**Description**

CROSS-REFERENCES TO RELATED APPLICATIONS

The present application claims priorities to Chinese patent application No. 202211217058.2 filed on September 30, 2022, entitled "Resource Location Determination Method, and Device, Apparatus and Storage Medium", which is hereby incorporated by reference in its entirety.

FIELD

The present application relates to the field of communications, and in particular, to methods and apparatuses for resource location determination, devices and a storage medium.

BACKGROUND

Energy consumption is a main indicator of operating costs for operators, and most of the energy consumption comes from a radio access network, especially an active antenna unit (AAU). Currently, energy consumption of a 5th generation (5G) network is about 2 to 3 times of energy consumption of a 4th generation (4G) network, and research on energy-saving technologies for 5G network energy consumption is imminent.

In response to this problem, traditional technologies mainly discuss various technologies that are conducive to reducing energy consumption of a network device from perspectives of time domain, frequency domain, spatial domain, power domain, etc. In a discussion of time domain energy-saving technologies, how to reduce sending or receiving of some information or signals, such as sending or receiving of a paging message, has become a potential research direction, and has not been discussed in traditional technologies.

BRIEF SUMMARY

Embodiments of the present application provide methods and apparatuses for resource location determination, devices and a storage medium, to solve a problem in the related art of how to reduce sending or receiving of some information or signals, thereby reducing energy consumption of a network device.

An embodiment of the present application provides a method for resource location determination, including: determining a resource location of one or more second signals based on a resource location and/or a period of a first signal, where the first signal includes a cell-level signal, a broadcast signal, or a public signal.

In any one of the embodiments of the present application, determining the resource location of the one or more second signals based on the resource location of the first signal includes:

determining a target signal, where the target signal is a target first signal among at least one first signal; and

determining the resource location of the one or more second signals based on a resource location of the target signal.

In any one of the embodiments of the present application, the method further includes:

determining a first discontinuous reception (DRX) cycle,

where the target signal is a target first signal among at least one first signal in the first DRX cycle.

In any one of the embodiments of the present application, determining the first DRX cycle includes: determining the first DRX cycle based on the period of the first signal and a second DRX cycle, where the second DRX cycle is a minimum value of a DRX cycle of a terminal device configured by a higher layer signaling and a DRX cycle broadcast by a system message.

In any one of the embodiments of the present application, the first DRX cycle is a DRX cycle for determining the resource location of the second signal in case that a network device is in a power-saving state.

In any one of the embodiments of the present application, the first DRX cycle is a larger value of the period of the first signal and a second DRX cycle.

In any one of the embodiments of the present application, determining the target signal includes:

determining the target signal based on a first parameter,
where the first parameter includes at least one of the following:

a quantity of periods of a first signal contained in the first DRX cycle;

a sequence number of a period of a first signal in the first DRX cycle; or

identification information of a terminal device.

In any one of the embodiments of the present application, determining the resource location of one second signal based on the resource location of the target signal includes:
determining the resource location of the one second signals based on the resource location of the target signal and a first offset.

In any one of the embodiments of the present application, determining the resource locations of multiple second signals based on the resource location of the target signal includes:
determining a resource location of a first signal window based on the resource location of the target signal, where the first signal window includes multiple second signals.

In any one of the embodiments of the present application, determining the resource location of the first signal window based on the resource location of the target signal includes:

determining a starting resource location of the first signal window based on the resource location of the target signal and a second offset; and

determining the resource locations of the multiple second signals in the first signal window based on the starting resource location of the first signal window and a second parameter, where the second parameter is used to indicate absolute locations of the multiple second signals in the first signal window or offsets of the multiple second signals relative to the starting resource location of the first signal window.

In any one of the embodiments of the present application, determining the resource locations of multiple second signals based on the resource location of the target signal includes:

determining a resource location of a first second signal among the multiple second signals based on the resource location of the target signal; and
determining resource locations of other second signals among the multiple second signals based on the resource location of the first second signal among the multiple second signals.

In any one of the embodiments of the present application, determining the resource locations of multiple second signals based on the resource location of the target signal includes:
determining a resource location of each second signal among the multiple second signals based on the resource location of the target signal and a third offset, where the third offset includes multiple offsets.

In any one of the embodiments of the present application, determining the resource location of the one or more second signals based on the period of the first signal includes:

determining a third parameter based on the period of the first signal, where the third parameter is used to indicate a quantity of second signals or a quantity of radio frames corresponding to the second signal or a quantity of second signal sets or a quantity of radio frames corresponding to a second signal set in the first DRX cycle, where the second signal set includes the one or more second signals; and

determining a resource location corresponding to the one or more second signals based on the third parameter.

In any one of the embodiments of the present application, determining the resource location corresponding to the one or more second signals based on the third parameter includes:

determining a radio frame number corresponding to the second signal or a radio frame number corresponding to the second signal set based on the third parameter; and

determining the resource location corresponding to the one or more second signals based on the radio frame number corresponding to the second signal or the radio frame number corresponding to the second signal set and a fourth parameter, where the fourth parameter is used to indicate an offset of the second signal relative to the radio frame number corresponding to the second signal, or to indicate offsets of multiple second signals among the second signal set relative to the radio frame number corresponding to the second signal set.

In any one of the embodiments of the present application, a resource location of a second signal determined by a first version terminal device is a first resource location, the first resource location is different from a second resource location, and the second resource location is a resource location of a second signal determined by a second version terminal device.

In any one of the embodiments of the present application, determining the resource location of the one or more second signals includes:

determining a resource location of a first target second signal in a third DRX cycle, and determining a resource location of a second target second signal in a fourth DRX cycle, where a relative location or a sequence number of the resource location of the first target second signal in the third DRX cycle is different from a relative location or a sequence number of the resource location of the second target second signal in the fourth DRX cycle,

where the third DRX cycle and the fourth DRX cycle are different first DRX cycles.

In any one of the embodiments of the present application, the method further includes one of the following:

sending the one or more second signals at a resource location of the one or more second signals; or

receiving the one or more second signals at resource locations of the one or more second signals.

In any one of the embodiments of the present application, the second signal includes at least one of the following: a paging physical downlink control channel (PDCCH), paging downlink control information (DCI), a paging physical downlink shared channel (PDSCH), or a random access channel (RACH) occasion.

An embodiment of the present application further provides a method for resource location determination, including:

determining a resource location of one or more second signals based on a resource location and/or a period of a first signal, where the first signal includes a cell-level signal, a broadcast signal, or a public signal; and sending the one or more second signals to a terminal device at the resource location of the one or more second signals, or receiving the one or more second signals sent from a terminal device at the resource location of the one or more second signals.

In any one of the embodiments of the present application, determining the resource location of the one or more second signals based on the resource location of the first signal includes:

determining a target signal, where the target signal is a target first signal among at least one first signal; and

determining the resource location of the one or more second signals based on a resource location of the target signal.

In any one of the embodiments of the present application, the method further includes:

determining a first discontinuous reception (DRX) cycle corresponding to the terminal device,

where the target signal is a target first signal among at least one first signal in the first DRX cycle.

In any one of the embodiments of the present application, determining the first DRX cycle corresponding to the terminal device includes:
determining the first DRX cycle based on the period of the first signal and a second DRX cycle, where the second DRX cycle is a minimum value of a DRX cycle of the terminal device configured by a higher layer signaling and a DRX cycle broadcast by a system message.

In any one of the embodiments of the present application, the first DRX cycle is a DRX cycle for determining the resource location of the second signal in case that a network device is in a power-saving state.

In any one of the embodiments of the present application, the first DRX cycle is a larger value of the period of the first signal and a second DRX cycle.

In any one of the embodiments of the present application, determining the target signal includes:

determining the target signal based on a first parameter,
where the first parameter includes at least one of the following:

a quantity of periods of a first signal contained in the first DRX cycle;

a sequence number of a period of a first signal in the first DRX cycle; or

identification information of the terminal device.

In any one of the embodiments of the present application, determining the resource location of one second signal based on the resource location of the target signal includes:
determining the resource location of the one second signals based on the resource location of the target signal and a first offset.

In any one of the embodiments of the present application, determining the resource locations of multiple second signals based on the resource location of the target signal includes:
determining a resource location of a first signal window based on the resource location of the target signal, where the first signal window includes multiple second signals.

In any one of the embodiments of the present application, determining the resource location of the first signal window based on the resource location of the target signal includes:

determining a starting resource location of the first signal window based on the resource location of the target signal and a second offset; and

determining the resource locations of the multiple second signals in the first signal window based on the starting resource location of the first signal window and a second parameter, where the second parameter is used to indicate absolute locations of the multiple second signals in the first signal window or offsets of the multiple second signals relative to the starting resource location of the first signal window.

In any one of the embodiments of the present application, determining the resource locations of multiple second signals based on the resource location of the target signal includes:

determining a resource location of a first second signal among the multiple second signals based on the resource location of the target signal; and
determining resource locations of other second signals among the multiple second signals based on the resource location of the first second signal among the multiple second signals.

In any one of the embodiments of the present application, determining the resource locations of multiple second signals based on the resource location of the target signal includes:
determining a resource location of each second signal among the multiple second signals based on the resource location of the target signal and a third offset, where the third offset includes multiple offsets.

In any one of the embodiments of the present application, determining the resource location of the one or more second signals based on the period of the first signal includes:

determining a third parameter based on the period of the first signal, where the third parameter is used to indicate a quantity of second signals or a quantity of radio frames corresponding to the second signal or a quantity of second signal sets or a quantity of radio frames corresponding to a second signal set in the first DRX cycle, where the second signal set includes the one or more second signals; and

determining a resource location corresponding to the one or more second signals based on the third parameter.

In any one of the embodiments of the present application, determining the resource location corresponding to the one or more second signals based on the third parameter includes:

determining a radio frame number corresponding to the second signal or a radio frame number corresponding to the second signal set based on the third parameter; and

determining the resource location corresponding to the one or more second signals based on the radio frame number corresponding to the second signal or the radio frame number corresponding to the second signal set and a fourth parameter, where the fourth parameter is used to indicate an offset of the second signal relative to the radio frame number corresponding to the second signal, or to indicate offsets of multiple second signals among the second signal set relative to the radio frame number corresponding to the second signal set.

In any one of the embodiments of the present application, determining the resource location of the one or more second signals includes:

determining a resource location of a first target second signal in a third DRX cycle, and determining a resource location of a second target second signal in a fourth DRX cycle, where a relative location or a sequence number of the resource location of the first target second signal in the third DRX cycle is different from a relative location or a sequence number of the resource location of the second target second signal in the fourth DRX cycle,

where the third DRX cycle and the fourth DRX cycle are different first DRX cycles.

In any one of the embodiments of the present application, the second signal includes at least one of the following: a paging physical downlink control channel (PDCCH), paging downlink control information (DCI), a paging physical downlink shared channel (PDSCH), or a random access channel (RACH) occasion.

An embodiment of the present application further provides a terminal device, including a memory, a transceiver and a processor,

where the memory is used for storing a computer program, the transceiver is used for receiving and sending data under control of the processor, and the processor is used for reading the computer program in the memory and performing steps of any one of the methods for resource location determination performed by the terminal device described above.

An embodiment of the present application further provides a network device, including a memory, a transceiver, and a processor,

where the memory is used for storing a computer program, the transceiver is used for receiving and sending data under control of the processor, and the processor is used for reading the computer program in the memory and performing steps of any one of the methods for resource location determination performed by the network device described above.

An embodiment of the present application further provides an apparatus for resource location determination, including:

a first determining unit, used for determining a resource location of one or more second signals based on a resource location and/or a period of a first signal, where the first signal includes a cell-level signal, a broadcast signal, or a public signal.

An embodiment of the present application further provides a processor-readable storage medium, where the processor-readable storage medium stores a computer program, and the computer program is used to cause a processor to perform steps of any one of the methods for resource location determination described above.

In the methods and apparatuses for resource location determination, the devices and the storage medium provided by the embodiments of the present application, the resource location of the one or more second signals is determined based on the resource location and/or the period of the first signal, so that the resource location of the second signal can change with the resource location or the period of the first signal, unnecessary sending occasions of the second signal are reduced when changing the resource location or the period of the first signal, which may effectively reduce energy consumption of a communication device.

BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.

FIG. 1 is a first schematic flowchart of a method for resource location determination according to an embodiment of the present application;

FIG. 2 is a schematic diagram of determining a first discontinuous reception (DRX) cycle according to an embodiment of the present application;

FIG. 3 is a second schematic diagram of determining a first discontinuous reception (DRX) cycle according to an embodiment of the present application;

FIG.4 is a schematic diagram of determining resource locations of multiple second signals based on a resource location of a target signal according to an embodiment of the present application;

FIG. 5 is a schematic diagram of terminal devices of different versions determining a resource location of a second signal according to an embodiment of the present application;

FIG. 6 is a schematic diagram of determining a resource location of a second signal in different first discontinuous reception (DRX) cycles according to an embodiment of the present application;

FIG. 7 is a second schematic flowchart of a method for resource location determination according to an embodiment of the present application;

FIG. 8 is a schematic structural diagram of a terminal device according to an embodiment of the present application;

FIG. 9 is a schematic structural diagram of a network device according to an embodiment of the present application;

FIG. 10 is a first schematic structural diagram of an apparatus for resource location determination according to an embodiment of the present application; and

FIG. 11 is a second schematic structural diagram of an apparatus for resource location determination according to an embodiment of the present application.

DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

Solutions of the embodiments of the present application may be clearly and completely described in combination with the drawings of the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

The solutions provided by the embodiments of the present application may be applied to a variety of systems, especially $5^{th}$ generation (5G) systems. For example, applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, or a user device, which is not limited in the embodiments of the present application.

The network device involved in the embodiments of the present application may be a base station, and the base station may include multiple cells providing services for a terminal. Depending on specific application scenarios, the base station may also be called an access point (AP), or may be a device in the access network that communicates with wireless terminal through one or more sectors on the air interface, or other names. The network device may be used to exchange received air frames with Internet protocol (IP) packets, and act as a router between wireless terminal and the rest of the access network, and the rest of the access network may include an Internet protocol (IP) communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), a B5G base station in beyond 5th generation mobile communication system (B5G), a 6G base station in 6G (6th generation mobile communication technology) network architecture, may also be a home evolved node B (HeNB), a relay node, a femto base station (femto), a pico base station (pico), etc., which are not limited in the embodiments of the present application. In some network structures, a network device may include a centralized unit (CU) node and a distributed unit (DU) node, and the centralized unit and the distributed unit may also be geographically separated.

The following first introduces a method for paging occasion (PO) resource location determination in the related art.

The description of paging in a traditional new radio (NR) protocol is as follows. A paging message includes a paging physical downlink control channel (PDCCH) and a paging physical downlink shared channel (PDSCH), where the paging PDCCH is used to carry scheduling information of the paging PDSCH. A user equipment (UE) in a radio resource control idle (RRC IDLE) state or a radio resource control inactive (RRC INACTIVE) state needs to follow a discontinuous reception (DRX) principle when receiving paging. A terminal monitors one PO in each DRX cycle. One PO is composed of a group of PDCCH monitoring occasions (MO), which may contain multiple slots (such as subframes or orthogonal frequency division multiplexing (OFDM) symbols), and the paging PDCCH is sent at the PDCCH MO. A paging frame is a radio frame that may contain one or more POs or the starting point of a PO. In a multi-beam operation, the terminal assumes that all transmission beams repeatedly transmit the same paging message and short message. How to select an appropriate beam and receive the paging message and the short message is a problem for the terminal in implementation.

The paging frame and paging occasion are determined based on the following rules.

A system frame number (SFN) corresponding to the paging frame is determined based on the following formula: (SFN+PF_offset) mod T = (T div N) * (UE_ID mod N),

where T is a DRX cycle (i.e., a second DRX cycle in the present application), a value of T is a minimum value of a UE specific DRX cycle configured by a higher layer signaling (an RRC signaling and/or a core network signaling) and a default DRX cycle broadcast by a system message, whose unit is in a radio frame, N is a total quantity of paging frames in each DRX cycle, PF_offset is used to determine an offset of the paging frame, UE_ID = 5G-S-TMSI mod 1024, where 5G-S-TMSI is a bit string of 48-bit.

Each paging frame contains Ns paging occasions, and an index of each PO is i_s, which is determined by the following formula:

$$i\_s = floor\ (UE\_ID/N)\ mod\ Ns,$$

where parameters N, PF_offset, Ns are notified by system information block 1 (SIB1) signaling.

The terminal determines the paging PDCCH monitoring occasion based on paging search space specified in TS 38.213 and a first PDCCH monitoring occasion of a PO (firstPDCCH-MonitoringOccasionOfPO) configured in a DownlinkConfigCommonSIB field in TS 38.331 and a quantity of paging PDCCH MOs corresponding to one synchronization signal block (SSB) (nrofPDCCHMonitoringOccasionPerSSB-InPO).

The method for PO resource location determination has the following problems: in case that POs are sparse, once there are paging PDCCHs at multiple POs, a gNB needs to wake up multiple times to send paging downlink control information (DCI) and a PDSCH carrying paging. The multiple POs are scattered, which is not conducive to the gNB entering a low-power sleep state.

A current discussion is to reduce sending of public signals such as a SSB, such as extending a sending period of SSB. Before receiving paging PDCCH, a UE needs to use 1 to 3 SSBs to calibrate frequency deviation. It is assumed that a SSB period is extended to be greater than a sending period/a sending interval of a PO/a paging frame (PF), there are some POs (POs relatively far from the SSB, such as those greater than 160 ms) that cannot use the SSB to calibrate the frequency deviation. At this time, a UE monitoring these POs cannot receive a paging PDCCH, and thus cannot receive a paging PDSCH.

It is assumed that the SSB period is 640 ms and a value of N is less than or equal to T/16. At this time, there are at least 4 POs in one SSB period. However, only one PO is close to the SSB, and distances between other POs and the SSB are all more than 160 ms. At this time, UEs on other POs do not have an SSB for automatic gain control (AGC) and cannot calibrate the frequency deviation.

It is assumed that the SSB period is 160 ms and the value of N is T/4. At this time, there are 4 POs (PO1, PO2, PO3, PO4) in one SSB period. However, only one PO (PO1) is close to the SSB, and other three POs (PO2, PO3, PO4) are far away from the SSB. At this time, performance of UE in frequency deviation calibration on PO2, PO3, and PO4 is not as good as that on PO1, which is unfair.

Embodiments of the present application provide methods and apparatuses for resource location determination, devices and a storage medium, to reduce sending or receiving of some information or signals, thereby reducing energy consumption of a network device.

The methods and the apparatuses are based on the same application concept. Since the methods and the apparatuses solve problems in a similar principle, implementation of the apparatuses and the methods may refer to each other, and repetitions will not be repeated.

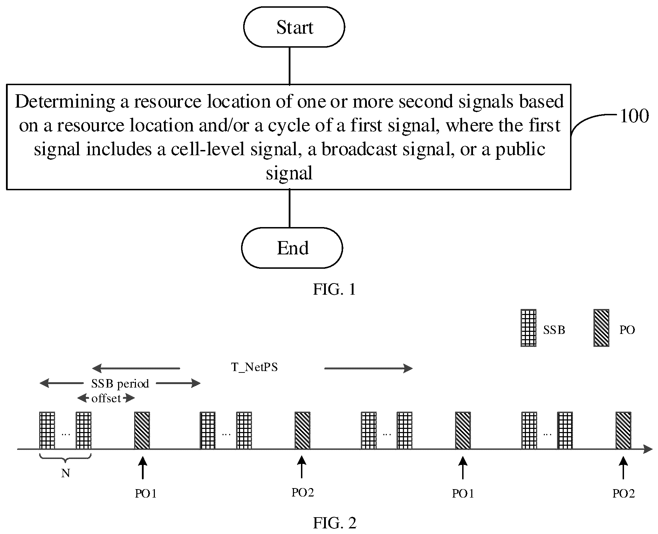

FIG. 1 is a first schematic flowchart of a method for resource location determination according to an embodiment of the present application. As shown in FIG. 1, an embodiment of the present application provides a method for resource location determination, performed by a terminal device. The method includes the following steps.

Step 100: determining a resource location of one or more second signals based on a resource location and/or a period of a first signal, where the first signal includes a cell-level signal, a broadcast signal, or a public signal.

In any one of the embodiments of the present application, the terminal device determines the resource location of the one or more second signals based on the resource location and/or the period of the first signal.

In any one of the embodiments of the present application, the second signal includes at least one of the following: a paging physical downlink control channel (PDCCH), paging downlink control information (DCI), a paging physical downlink shared channel (PDSCH), or a random access channel (RACH) occasion.

In any one of the embodiments of the present application, the second signal may be a paging PDCCH or paging DCI or a paging PDSCH, and the resource location of the second signal may be a resource location of the paging PDCCH or a resource location of the paging DCI or a resource location of the paging PDSCH or a resource location of a PO. The second signal may further be an RACH occasion (RO), and the resource location of the second signal is a resource location of the RO, that is, the RO resource is also determined based on the resource location of the first signal.

In any one of the embodiments of the present application, the first signal includes a cell-level signal, a broadcast signal, or a public signal.

In any one of the embodiments of the present application, the first signal includes at least one of the following: a synchronization signal block (SSB), a discovery reference signal (DRS), a primary synchronization signal (PSS), a secondary synchronization signal (SSS), a master information block (MIB), and a system information block (SIB1). The first signal may further be a newly designed downlink common signal, which is not limited in the present application.

For example, a UE determines the resource location of the second signal based on the resource location of the first signal. The UE determines the resource location of the PO or a PO set based on the resource location of an SSB/a DRS/an PSS/a SSS/an MIB, so that the UE may use 1 to 3 SSBs to calibrate frequency deviation before receiving the paging PDCCH. It is assumed that a SSB period is extended to reduce power consumption of a network device, sending resource locations of the paging PDCCH is further reduced accordingly, which further reduces the power consumption of the network device.

In the method for resource location determination provided by the embodiment of the present application, the resource location of the one or more second signals is determined based on the resource location and/or the period of the first signal, so that the resource location of the second signal can change with the resource location or the period of the first signal, unnecessary sending occasions of the second signal are reduced when changing the resource location or the period of the first signal, thereby reducing the energy consumption of the network device.

In any one of the embodiments of the present application, determining the resource location of the one or more second signals based on the resource location of the first signal includes:

determining a target signal, where the target signal is a target first signal among at least one first signal; and

determining the resource location of the one or more second signals based on a resource location of the target signal.

In any one of the embodiments of the present application, the target signal is a target first signal among at least one first signal.

It should be noted that, in various embodiments of the present application, the target signal may be a set including multiple target first signals.

The target signal may also be a set of target first signals, including N first signals/target signals/target first signals. The resource location of the target signal may be a resource location of a target signal among a target signal set.

The terminal device determines the target signal, and determines the resource location of the one or more second signals based on the resource location of the target signal.

In the method for resource location determination provided by the embodiment of the present application, the target signal is determined from the target first signal among at least one first signal, and the resource location of the one or more second signals is determined based on a resource location and/or a period of the target signal, so that the resource location of the second signal can change with the resource location or the period of the target signal, and unnecessary sending occasions of the second signal are reduced when changing the resource location of the target signal, thereby reducing the power consumption of the network device.

In any one of the embodiments of the present application, the method further includes:

determining a first discontinuous reception (DRX) cycle,
where the target signal is a target first signal among at least one first signal in the first DRX cycle.

In any one of the embodiments of the present application, the terminal device determines the first DRX cycle, and determines the target first signal (that is, the target signal) from at least one first signal in the first DRX cycle.

In any one of the embodiments of the present application, determining the first DRX cycle includes: determining the first DRX cycle based on the period of the first signal and a second DRX cycle.

The first signal may be one set, that is, one period of the first signal may include one first signal or may include multiple first signals, and the multiple first signals may be collectively regarded as the first signal. The period of the first signal may also be understood as a first signal set or periods of multiple first signals. In case that the period of the first signal includes multiple first signals, the period of the first signal may be considered as a long period (first period) of the first signal, and multiple first signals may further be periodically sent within the long period of the first signal, for example, multiple first signals may be sent within the long period of the first signal with a short period (second period) of the first signal. At this time, the first DRX cycle may be determined based on the long period and the second DRX cycle of the first signal, or the first DRX cycle may be determined based on the short period and the second DRX cycle of the first signal, or the first DRX cycle may be determined based on the first period and the second DRX cycle of the first signal, or the first DRX cycle may be determined based on the second period and the second DRX cycle of the first signal. As shown in FIG. 2, the first signal at this time is N first signals, the long period or first period of the first signal is represented by an SSB period, and the N first signals are sent N times with the short period or the second period of the first signal within the long period or the first period of the first signal.

For convenience of description, T_NetPS is used to represent the first DRX cycle, and T is used to represent the second DRX cycle.

That is, T_NetPS is determined based on the period of the first signal and T.

In any one of the embodiments of the present application, the second DRX cycle is a minimum value of a DRX cycle of the terminal device configured by a higher layer signaling and a DRX cycle broadcast by a system message, where the higher layer signaling includes an RRC signaling and/or a core network signaling.

In any one of the embodiments of the present application, the second DRX cycle is a DRX cycle in the related art. A value of T is a minimum value of a UE specific DRX cycle configured by a higher layer signaling (an RRC signaling and/or a core network signaling) and a default DRX cycle broadcast by a system message, whose unit is in a radio frame.

In any one of the embodiments of the present application, the first DRX cycle is a DRX cycle corresponding to a resource location of a second signal determined in case that the network device is in a power-saving state.

In any one of the embodiments of the present application, the first DRX cycle is a DRX cycle proposed by the present application for determining the resource location of the second signal in case that the network device is in a power-saving state, and the first DRX cycle is the DRX cycle in case that the network device is in a power-saving state.

In any one of the embodiments of the present application, the first DRX cycle is a larger value of the period of the first signal and a second DRX cycle.

The first signal being a SSB is taken as an example for description in the following.

1. In case that the second DRX cycle T is greater than the SSB period, T_NetPS is equal to T, as shown in FIG. 2. FIG. 2 is a schematic diagram of determining a first discontinuous reception (DRX) cycle according to an embodiment of the present application.

In any one of the embodiments of the present application, the SSB period represents a first period or a long period of a SSB set, and the SSB set is sent periodically based on a value of the first period. For example, one SSB set is included within one first period, and one SSB set includes N SSBs, where N is greater than or equal to 1. N SSBs are sent periodically based on a value of the second period or a short period of the SSB. It should be noted that the period of the first signal in all embodiments of the present application may be understood as a period of the first signal set.

N SSBs in one SSB set may be sent periodically with the value of the second period, where the value of the second period is smaller than the value of the first period, and the value of the first period may be an integer multiple of the second period.

N SSBs in one SSB set may be sent non-periodically, for example, may be sent based on a fixed N SSB sending pattern.

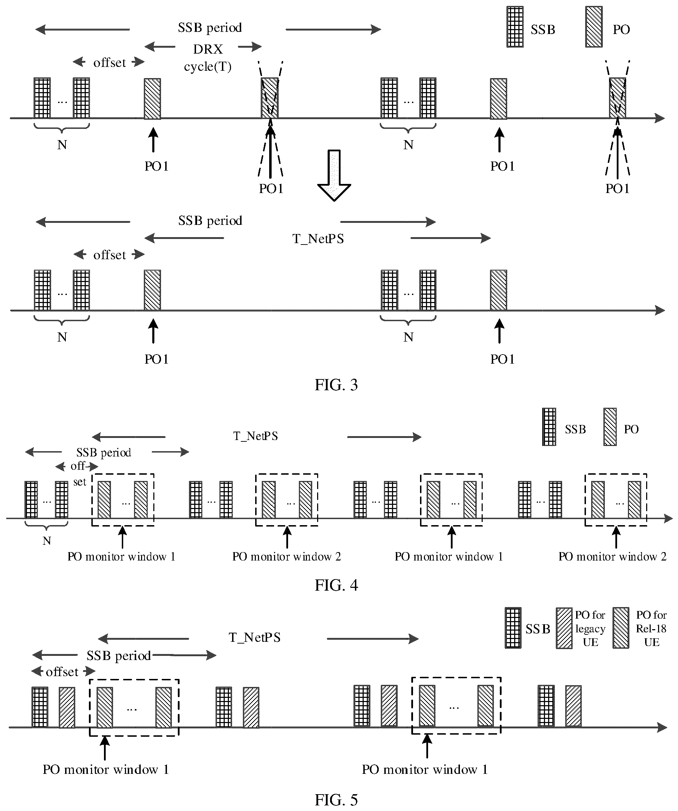

2. In case that the second DRX cycle T is less than the SSB period, T_NetPS is equal to the SSB period, as shown in a lower figure of FIG. 3. FIG. 3 is a second schematic diagram of determining a first discontinuous reception (DRX) cycle according to an embodiment of the present application.

The UE determines a location of the PO based on T (DRX cycle) in the related art. In case that T is less than the SSB period, some POs will not have an SSB before them. In case that there is no SSB before a PO, synchronization performance of the UE will be affected, and performance of the UE receiving paging DCI will be affected. As shown in an upper figure of FIG. 3, there is no SSB before the second PO and the fourth PO. Therefore, in this case, this embodiment makes a value of T_NetPS equal to the SSB period. In case that the UE determines the location of the PO based on the SSB period, all POs have a SSB before them to ensure the synchronization performance.

In case that a gNB is in a network power-saving state, a value of the first DRX cycle (T_NetPS) may be expressed as: T_NetPS = max(T,SSB period).

For example, the UE determines a target SSB, where the target SSB is one of the at least one SSB in T_NetPS. In case that the value of T_NetPS is greater than the SSB period, T_NetPS includes multiple SSBs. As shown in FIG. 2, T_NetPS includes 2 SSBs, and the target SSB determined by the UE is one of the 2 SSBs. In case that the value of T_NetPS is equal to the SSB period, T_NetPS includes 1 SSB. As shown in FIG. 3, the target SSB determined by the UE is the SSB included in T_NetPS.

In any one of the embodiments of the present application, determining the target signal includes:

determining the target signal based on a first parameter,
where the first parameter includes at least one of the following:

a quantity of periods of a first signal contained in the first DRX cycle;

a sequence number of a period of a first signal in the first DRX cycle; or

identification information of the terminal device.

In any one of the embodiments of the present application, the terminal device determines the target first signal, that is, determines the target signal, from at least one first signal in the first DRX cycle based on the quantity of periods of the first signal contained in the first DRX cycle, the sequence number of the period of the first signal in the first DRX cycle and/or the identification information of the terminal device.

For example, the UE determines the target SSB based on a quantity of SSB periods in the first DRX cycle T_NetPS and/or a sequence number of a SSB period in T_NetPS and/or an UE_ID. As shown in FIG. 2, it is assumed that UE_ID = 0, the UE determines that T_NetPS includes 2 SSBs, and the UE calculates UE_ID mod 2 = 0, thereby determining that the target SSB is the first SSB of the 2 SSBs.

In any one of the embodiments of the present application, determining the resource location of one second signal based on the resource location of the target signal includes:
determining the resource location of the one second signals based on the resource location of the target signal and a first offset.

The terminal device determines the resource location of the one second signal based on the resource location of the target signal and the first offset.

The first offset is used to determine the resource location of the one second signal.

As shown in FIG. 2, the target SSB is actually a target SSB set, where the target SSB set includes N SSBs. The UE may determine the resource location of the second signal based on one SSB among the N SSBs and the first offset. For example, the UE determines the resource location of the second signal based on an (N-1)-th (the last) SSB among the N SSBs and the first offset.

In any one of the embodiments of the present application, the first offset may be notified by the network device to the terminal device, or may be predefined by the protocol. It should be noted that all the offsets mentioned in the various embodiments of the present application may be notified by the network device to the terminal device, or may be predefined by the protocol.

In the method for resource location determination provided by the embodiment of the present application, the first DRX cycle is determined, where the first DRX cycle is a larger value of the period of the first signal and the second DRX cycle, the target first signal is determined from at least one first signal in the first DRX cycle as the target signal, and the resource location of the second signal is determined based on the resource location of the target signal. Unnecessary sending occasions of the second signal may be reduced, thereby reducing device power consumption while taking into account transmission efficiency.

The above embodiment describes a solution of determining a resource location of one second signal based on a resource location of a target signal. The following describes a solution for determining resource locations of multiple second signals based on a resource location of a target signal.

FIG.4 is a schematic diagram of determining resource locations of multiple second signals based on a resource location of a target signal according to an embodiment of the present application, which includes the following embodiments.

Embodiment 1: determining the resource locations of multiple second signals based on the resource location of the target signal includes:
determining a resource location of a first signal window based on the resource location of the target signal, where the first signal window includes multiple second signals.

In any one of the embodiments of the present application, the terminal device may determine the resource location of the first signal window based on the resource location of the target signal, where the first signal window includes multiple second signals.

In any one of the embodiments of the present application, determining the resource location of the first signal window based on the resource location of the target signal includes:

determining a starting resource location of the first signal window based on the resource location of the target signal and a second offset; and
determining the resource locations of the multiple second signals in the first signal window based on the starting resource location of the first signal window and a second parameter, where the second parameter is used to indicate absolute locations of the multiple second signals in the first signal window or offsets of the multiple second signals relative to the starting resource location of the first signal window.

In any one of the embodiments of the present application, the terminal device determines the starting resource location of the first signal window based on the resource location of the target signal and the second offset.

The second offset is used to determine the starting resource location of the first signal window.

For example, the UE determines the resource location of the first signal window based on one SSB among N SSBs and the second offset. In any one of the embodiments of the present application, the UE determines the starting resource location of the second signal window based on an (N-1)-th (the last) SSB among N SSBs and the second offset.

Further, the terminal device determines the resource locations of the multiple second signals based on the resource location of the first signal window. In any one of the embodiments of the present application, the resource locations of the multiple second signals in the first signal window are determined based on the starting resource location of the first signal window and the second parameter, where the second parameter is used to indicate absolute locations of the multiple second signals in the first signal window or offsets of the multiple second signals relative to the starting resource location of the first signal window.

In any one of the embodiments of the present application, the terminal device determines the resource location of each second signal based on the starting resource location of the first signal window and the absolute location of each second signal in the first signal window or the offset of each second signal relative to the starting resource location of the first signal window.

Embodiment 2: determining the resource locations of multiple second signals based on the resource location of the target signal includes:

determining a resource location of a first second signal among the multiple second signals based on the resource location of the target signal; and

determining resource locations of other second signals among the multiple second signals based on the resource location of the first second signal among the multiple second signals.

In any one of the embodiments of the present application, the terminal device determines the resource location of the first second signal among the multiple second signals based on the resource location of the target signal and a fourth offset.

In any one of the embodiments of the present application, the resource locations of other second signals may be determined by the resource location of the first second signal and the relative locations of other second signals and the first second signal.

For example, the UE determines the resource location of the first second signal among multiple second signals based on one SSB among N SSBs and an offset. For example, the UE determines the resource location of the first second signal among multiple second signals based on an (N-1)-th (the last) SSB among N SSBs and an offset. The resource locations of other second signals are determined by the resource location of the first second signal and relative locations of each of the other second signals and the first second signal.

Embodiment 3: determining the resource locations of multiple second signals based on the resource location of the target signal includes:
determining a resource location of each second signal among the multiple second signals based on the resource location of the target signal and a third offset, where the third offset includes multiple offsets.

It should be noted that the third offset includes an offset of a resource location of each second signal among the multiple second signals relative to the target signal.

For example, the UE determines the resource location of each second signal among the multiple second signals based on an (N-1)-th (the last) SSB among the N SSBs and the offset corresponding to each second signal among the multiple second signals.

In the method for resource location determination provided by the embodiment of the present application, the first DRX cycle is determined, and the resource locations of multiple second signals are determined based on the resource location of the target signal. Unnecessary sending occasions of the second signal are reduced, thereby reducing the device power consumption while taking into account transmission efficiency.

An embodiment of the present application further provides a method for determining a resource location of one or more second signals, that is, determining a resource location of one or more second signals based on a period of a first signal.

In any one of the embodiments of the present application, determining the resource location of the one or more second signals based on the period of the first signal includes:

determining a third parameter based on the period of the first signal; and

determining a resource location corresponding to the one or more second signals based on the third parameter.

The third parameter is used to indicate a quantity of second signals or a quantity of radio frames corresponding to the second signal or a quantity of second signal sets or a quantity of radio frames corresponding to a second signal set in the first DRX cycle, where the second signal set includes the one or more second signals.

In any one of the embodiments of the present application, a value of the third parameter is associated with the period of the first signal. For example, the third parameter is denoted as M, where M = T_NetPS/SSB period, or M = floor (T_NetPS/SSB period), where floor () represents rounding down.

In any one of the embodiments of the present application, determining the resource location corresponding to the one or more second signals based on the third parameter includes:

determining a radio frame number corresponding to the second signal or a radio frame number corresponding to the second signal set based on the third parameter; and

determining the resource location corresponding to the one or more second signals based on the radio frame number corresponding to the second signal or the radio frame number corresponding to the second signal set, and a fourth parameter.

In any one of the embodiments of the present application, the terminal device determining the radio frame number corresponding to the second signal or the radio frame number corresponding to the second signal set based on the third parameter satisfies the following formula:

$$(\text{SFN+offset2}) \bmod \text{T\_NetPS} = (\text{T\_NetPS div third parameter}) * (\text{UE\_ID} \bmod \text{third parameter})$$

where SFN is the radio frame number corresponding to the second signal or the radio frame number corresponding to the second signal set, and offset2 is the offset configured by the system message.

It is assumed that T_NetPS=64 radio frames, SSB period=32 radio frames, offset2=0, third parameter = T_NetPS/SSB period=2, and T_NetPS div third parameter=32.

For a UE with UE_ID=0, UE_ID mod third parameter=0. At this time, the radio frame number corresponding to the second signal or the radio frame number corresponding to the second signal set determined by the UE is 0, 64, 128, ....

For a UE with UE_ID=1, UE_ID mod third parameter=1. At this time, the radio frame number corresponding to the second signal or the radio frame number corresponding to the second signal set determined by the UE is 32, 96, 160, ....

In any one of the embodiments of the present application, the fourth parameter is used to indicate an offset of the second signal relative to the radio frame number corresponding to the second signal.

In any one of the embodiments of the present application, the fourth parameter is used to indicate offsets of multiple second signals in the second signal set relative to the radio frame number corresponding to the second signal set.

At this time, the fourth parameter includes multiple offsets, and the second signal set includes multiple second signals.

In any one of the embodiments of the present application, the terminal device calculates a sequence number of a second signal to be monitored in the second signal set, and determines the resource location of the second signal based on the radio frame number corresponding to the second signal set and the offset corresponding to the sequence number in multiple offsets in the fourth parameter.

In any one of the embodiments of the present application, the terminal device may determine the sequence number of the second signal to be monitored in the second signal set by the following formula:

i_s = floor (UE_ID/third parameter) mod the quantity of second signals contained in the second signal set.

The resource location of the PO/the PF is determined based on a third parameter (for example, the quantity of radio frames corresponding to the second signal in the first DRX cycle). The value of the third parameter is related to the SSB period, so that when the SSB period is extended, the value of the third parameter decreases. At this time, the quantity of radio frames corresponding to the second signal in the first DRX cycle is reduced, thereby reducing unnecessary sending occasions of the second signal, and reducing the power consumption of the network device.

In the method for resource location determination provided by the embodiment of the present application, the resource location of the one or more second signals is determined based on the period of the first signal, so that the resource location of the second signal can follow a periodic change of the first signal. By changing the period of the first signal to reduce unnecessary sending occasions of the second signal, the device power consumption may be further reduced.

In any one of the embodiments of the present application, a resource location of a second signal determined by a first version terminal device is a first resource location, the first resource location is different from a second resource location, and the second resource location is a resource location of a second signal determined by a second version terminal device.

It should be noted that the first version terminal device and the second version terminal device are terminal devices of different versions. The first version terminal device appeared after the second version terminal device. In other words, the first version terminal device supports solutions of the present application, while the second version terminal device does not support the solutions of the present application.

The first version terminal device may determine the resource location of the second signal by using the method described in the aforementioned embodiments, which will not be repeated here.

In any one of the embodiments of the present application, a first version UE may be a release 18 (R18) UE, and a second version UE may be a legacy UE. FIG. 5 is a schematic diagram of terminal devices of different versions determining a resource location of a second signal according to an embodiment of the present application. As shown in FIG. 5, a resource location of a second signal determined by a first version terminal device is different from a resource location of a second signal determined by a second version terminal device.

For example, the first version UE determines the first resource location based on value 1 corresponding to the third parameter, and the second version UE determines the second resource location based on value 2 corresponding to the third parameter. In the third parameter, a value corresponding to value 1 is less than or greater than a value corresponding to value 2. Alternatively, the first version UE determines the first resource location based on value 0 corresponding to the third parameter, and the second version UE determines the second resource location based on value 1 corresponding to the third parameter. In the third parameter, a value corresponding to the value 0 is less than or greater than a value corresponding to value 1. Alternatively, the first version UE determines the first resource location based on value 2 corresponding to the third parameter, and the second version UE determines the second resource location based on value 1 corresponding to the third parameter. In the third parameter, a value corresponding to value 1 is less than or greater than a value corresponding to value 2. Alternatively, the first version UE determines the first resource location based on value 1 corresponding to the third parameter, and the second version UE determines the second resource location based on value 0 corresponding to the third parameter. In the third parameter, a value corresponding to the value 0 is less than or greater than a value corresponding to value 1.

In any one of the embodiments of the present application, determining the resource location of the one or more second signals includes:

determining a resource location of a first target second signal in a third DRX cycle, and determining a resource location of a second target second signal in a fourth DRX cycle, where a relative location or a sequence number of the resource location of the first target second signal in the third DRX cycle is different from a relative location or a sequence number of the resource location of the second target second signal in the fourth DRX cycle,

where the third DRX cycle and the fourth DRX cycle are different first DRX cycles.

It should be noted that the first target second signal and the second target second signal are two different second signals.

The terminal device may adopt the method described in the aforementioned embodiments for determining the resource location of the first target second signal in the third DRX cycle, which will not be repeated here.

The terminal device may adopt the method described in the aforementioned embodiments for determining the resource location of the second target second signal in the fourth DRX cycle, which will not be repeated here.

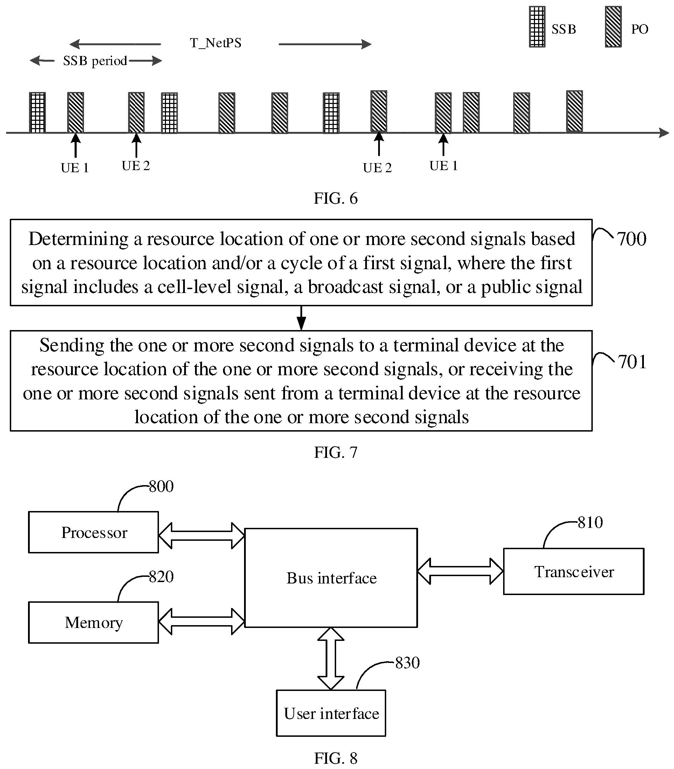

A relative location or a sequence number of the resource location of the first target second signal in the third DRX cycle is different from a relative location or a sequence number of the resource location of the second target second signal in the fourth DRX cycle. FIG. 6 is a schematic diagram of determining a resource location of a second signal in different first discontinuous reception (DRX) cycles according to an embodiment of the present application. As shown in FIG. 6:

UE1 determines a relative sequence number of the first target second signal in the third DRX cycle as a relative number corresponding to PO1, that is, UE1 monitors PO1, and UE2 determines a relative sequence number of the first target second signal in the third DRX cycle as a relative number corresponding to PO2, that is, UE2 monitors PO2; and

UE1 determines a relative sequence number of the second target second signal in the fourth DRX cycle as a relative number corresponding to PO2, that is, UE1 monitors PO2, and UE2 determines a relative sequence number of the second target second signal in the fourth DRX cycle as a relative number corresponding to PO1, that is, UE2 monitors PO1.

In the method for resource location determination provided by the embodiment of the present application, the UE is allowed to determine relative resource locations or sequence numbers of the second signal in different third DRX cycles and fourth DRX cycles, thereby reducing the power consumption of the network device and ensuring fairness among multiple UEs monitoring different POs in a DRX cycle or a SSB period.

In any one of the embodiments of the present application, the method further includes one of the following:

sending the one or more second signals at a resource location of the one or more second signals; or

receiving the one or more second signals at resource locations of the one or more second signals.

In any one of the embodiments of the present application, after the terminal device determines the resource location of the one or more second signals using the method provided by the above embodiments, one or more second signals may be sent or received at the resource location of the one or more second signals.

In any one of the embodiments of the present application, the terminal device determines the resource location of the one or more second signals using the method provided by the above embodiments, and receives the one or more second signals at the resource location of the one or more second signals. The network device determines the resource location of the one or more second signals using the method provided by the above embodiments, and sends the one or more second signals at the resource location of the one or more second signals. For example, the first signal is an SSB, and the second signal is a paging PDCCH.

In any one of the embodiments of the present application, the terminal device determines the resource location of the one or more second signals using the method provided by the above embodiments, and sends the one or more second signals at the resource location of the one or more second signals. The network device determines the resource location of the one or more second signals using the method provided by the above embodiments, and receives the one or more second signals at the resource location of the one or more second signals. For example, the first signal is an SSB, and the second signal is a RACH occasion.

FIG. 7 is a second schematic flowchart of a method for resource location determination according to an embodiment of the present application. As shown in FIG. 7, an embodiment of the present application provides a method for resource location determination, performed by a network device. The method includes the following steps.

Step 700: determining a resource location of one or more second signals based on a resource location and/or a period of a first signal, where the first signal includes a cell-level signal, a broadcast signal, or a public signal.

In any one of the embodiments of the present application, the network device determines the resource location of the one or more second signals based on the resource location and/or the period of the first signal.

In any one of the embodiments of the present application, the second signal includes at least one of the following: a paging physical downlink control channel (PDCCH), paging downlink control information (DCI), a paging physical downlink shared channel (PDSCH), or a random access channel (RACH) occasion.

In any one of the embodiments of the present application, the second signal may be a paging PDCCH or paging DCI or a paging PDSCH, and the resource location of the second signal may be a resource location of the paging PDCCH or a resource location of the paging DCI or a resource location of the paging PDSCH or a resource location of a PO. The second signal may further be an RACH occasion (RO), and the resource location of the second signal is a resource location of the RO, that is, the RO resource is also determined based on the resource location of the first signal.

In any one of the embodiments of the present application, the first signal includes a cell-level signal, a broadcast signal, or a public signal.

In any one of the embodiments of the present application, the first signal includes at least one of the following: a synchronization signal block (SSB), a discovery reference signal (DRS), a primary synchronization signal (PSS), a secondary synchronization signal (SSS), a master information block (MIB), and a system information block (SIB1). The first signal may further be a newly designed downlink common signal, which is not limited in the present application.

For example, a gNB determines the resource location of the second signal based on the resource location of the first signal. The gNB determines the resource location of the PO or a PO set based on the resource location of an SSB/a DRS/a PSS/an SSS/an MIB, so that the UE may use 1 to 3 SSBs to calibrate frequency deviation before receiving the paging PDCCH. It is assumed that a SSB period is extended to reduce power consumption of a network device, sending resource locations of the paging PDCCH is further reduced accordingly, which further reduces the power consumption of the network device.

Step 701: sending the one or more second signals to a terminal device at the resource location of the one or more second signals, or receiving the one or more second signals sent from a terminal device at the resource location of the one or more second signals.

After determining the resource location of the one or more second signals, the network device may send or receive the one or more second signals at the resource location of the one or more second signals.

In any one of the embodiments of the present application, the network device determines the resource location of the one or more second signals, and sends the one or more second signals at the resource location of the one or more second signals. For example, the first signal is an SSB, and the second signal is a paging PDCCH.

In any one of the embodiments of the present application, the network device determines the resource location of the one or more second signals, and receives the one or more second signals at the resource location of the one or more second signals. For example, the first signal is an SSB, and the second signal is a RACH occasion.

In the method for resource location determination provided by the embodiment of the present application, the resource location of the one or more second signals is determined based on the resource location and/or the period of the first signal, so that the resource location of the second signal can change with the resource location or the period of the first signal, unnecessary sending occasions of the second signal are reduced when changing the resource location or the period of the first signal, thereby reducing the energy consumption of the network device.

In any one of the embodiments of the present application, determining the resource location of the one or more second signals based on the resource location of the first signal includes:

determining a target signal, where the target signal is a target first signal among at least one first signal; and determining the resource location of the one or more second signals based on a resource location of the target signal.

In any one of the embodiments of the present application, the target signal is a target first signal among at least one first signal.

It should be noted that, in various embodiments of the present application, the target signal may be a set including multiple target first signals.

The target signal may also be a set of target first signals, including N first signals/target signals/target first signals. The resource location of the target signal may be a resource location of a target signal among a target signal set.

The network device determines the target signal, and determines the resource location of the one or more second signals based on the resource location of the target signal.

In the method for resource location determination provided by the embodiment of the present application, the target signal is determined from the target first signal among at least one first signal, and the resource location of the one or more second signals is determined based on a resource location the target signal, so that the resource location of the second signal can change with the resource location or the period of the target signal, and unnecessary sending occasions of the second signal are reduced when changing the resource location of the target signal, thereby reducing the power consumption of the network device.

In any one of the embodiments of the present application, the method further includes:

determining a first DRX cycle corresponding to the terminal device,

where the target signal is a target first signal among at least one first signal in the first DRX cycle.

In any one of the embodiments of the present application, the network device determines the first DRX cycle corresponding to the terminal device, and determines the target first signal (that is, the target signal) from at least one first signal in the first DRX cycle.

In any one of the embodiments of the present application, determining the first DRX cycle corresponding to the terminal device includes:

determining the first DRX cycle based on the period of the first signal and a second DRX cycle.

The first signal may be one set, that is, one period of the first signal may include one first signal or may include multiple first signals, and the multiple first signals may be collectively regarded as the first signal. The period of the first signal may also be understood as a first signal set or periods of multiple first signals. In case that the period of the first signal includes multiple first signals, the period of the first signal may be considered as a long period (first period) of the first signal, and multiple first signals may further be periodically sent within the long period of the first signal, for example, multiple first signals may be sent within the long period of the first signal with a short period (second period) of the first signal. At this time, the first DRX cycle may be determined based on the long period and the second DRX cycle of the first signal, or the first DRX cycle may be determined based on the short period and the second DRX cycle of the first signal, or the first DRX cycle may be determined based on the first period and the second DRX cycle of the first signal, or the first DRX cycle may be determined based on the second period and the second DRX cycle of the first signal. As shown in FIG. 2, the first signal at this time is N first signals, the long period or first period of the first signal is represented by an SSB period, and the N first signals are sent N times with the short period or the second period of the first signal within the long period or the first period of the first signal.

For convenience of description, T_NetPS is used to represent the first DRX cycle, and T is used to represent the second DRX cycle.

That is, T_NetPS is determined based on the period of the first signal and T.

In any one of the embodiments of the present application, the second DRX cycle is a minimum value of a DRX cycle of the terminal device configured by a higher layer signaling and a DRX cycle broadcast by a system message, where the higher layer signaling includes an RRC signaling and/or a core network signaling.

In any one of the embodiments of the present application, the second DRX cycle is a DRX cycle in the related art. A value of T is a minimum value of a UE specific DRX cycle configured by a higher layer signaling (an RRC signaling and/or a core network signaling) and a default DRX cycle broadcast by a system message, whose unit is in a radio frame.

In any one of the embodiments of the present application, the first DRX cycle is a DRX cycle corresponding to a resource location of a second signal determined in case that the network device is in a power-saving state.

In any one of the embodiments of the present application, the first DRX cycle is a DRX cycle proposed by the present application for determining the resource location of the second signal in case that the network device is in a power-saving state, and the first DRX cycle is the DRX cycle in case that the network device is in a power-saving state.

In any one of the embodiments of the present application, the first DRX cycle is a larger value of the period of the first signal and a second DRX cycle.

The first signal being a SSB is taken as an example for description in the following.

1. In case that the second DRX cycle T is greater than the SSB period, T_NetPS is equal to T, as shown in FIG. 2.

In any one of the embodiments of the present application, the SSB period represents a first period or a long period of a SSB set, and the SSB set is sent periodically based on a value of the first period. For example, one SSB set is included within one first period, and one SSB set includes N SSBs, where N is greater than or equal to 1. N SSBs are sent periodically based on a value of the second period or a short period of the SSB. It should be noted that the period of the first signal in all embodiments of the present application may be understood as a period of the first signal set.

N SSBs in one SSB set may be sent periodically with the value of the second period, where the value of the second period is smaller than the value of the first period, and the value of the first period may be an integer multiple of the second period.

N SSBs in one SSB set may be sent non-periodically, for example, may be sent based on a fixed N SSB sending pattern.

2. In case that the second DRX cycle T is less than the SSB period, T_NetPS is equal to the SSB period, as shown in a lower figure of FIG. 3.

The UE determines a location of the PO based on to T (DRX cycle) in the related art. In case that T is less than the SSB period, some POs will not have an SSB before them. In case that there is no SSB before a PO, synchronization performance of the UE will be affected, and performance of the UE receiving paging DCI will be affected. As shown in an upper figure of FIG. 3, there is no SSB before the second PO and the fourth PO. Therefore, in this case, this embodiment makes a value of T_NetPS equal to the SSB period. In case that the UE determines the location of the PO based on the SSB period, all POs have a SSB before them to ensure the synchronization performance.

In case that a gNB is in a network power-saving state, a value of the first DRX cycle (T_NetPS) may be expressed as: T_NetPS = max(T,SSB period).

For example, the gNB determines a target SSB, where the target SSB is one of the at least one SSB in T_NetPS. In case that the value of T_NetPS is greater than the SSB period, T_NetPS includes multiple SSBs. As shown in FIG. 2, T_NetPS includes 2 SSBs, and the target SSB determined by the gNB is one of the 2 SSBs. In case that the value of T_NetPS is equal to the SSB period, T_NetPS includes 1 SSB. As shown in FIG. 3, the target SSB determined by the gNB is the SSB included in T_NetPS.

In any one of the embodiments of the present application, determining the target signal includes:

determining the target signal based on a first parameter,

where the first parameter includes at least one of the following:

a quantity of periods of a first signal contained in the first DRX cycle;

a sequence number of a period of a first signal in the first DRX cycle; or

identification information of the terminal device.

In any one of the embodiments of the present application, the network device determines the target first signal, that is, determines the target signal, from at least one first signal in the first DRX cycle based on the quantity of periods of the first signal contained in the first DRX cycle, the sequence number of the period of the first signal in the first DRX cycle and/or the identification information of the terminal device.

For example, the gNB determines the target SSB based on a quantity of SSB periods in the first DRX cycle T_NetPS and/or a sequence number of a SSB period in T_NetPS and/or an UE_ID. As shown in FIG. 2, it is assumed that UE_ID = 0, the gNB determines that T_NetPS includes 2 SSBs, and the gNB calculates UE_ID mod 2= 0, thereby determining that the target SSB is the first SSB of the 2 SSBs.

In any one of the embodiments of the present application, determining the resource location of one second signal based on the resource location of the target signal includes:
determining the resource location of the one second signals based on the resource location of the target signal and a first offset.

The network device determines the resource location of the second signal based on the resource location of the target signal and the first offset.

The first offset is used to determine the resource location of the one second signal.

As shown in FIG. 2, the target SSB is actually a target SSB set, where the target SSB set includes N SSBs. The gNB may determine the resource location of the second signal based on one SSB among the N SSBs and the first offset. For example, the gNB determines the resource location of the second signal based on an (N-1)-th (the last) SSB among the N SSBs and the first offset.

In any one of the embodiments of the present application, the first offset may be determined by the network device or predefined by the protocol. It should be noted that the offsets mentioned in the various embodiments of the present application may be determined by the network device or predefined by the protocol.

In the method for resource location determination provided by the embodiment of the present application, the first DRX cycle is determined, where the first DRX cycle is a larger value of the period of the first signal and the second DRX cycle, the target first signal is determined from at least one first signal in the first DRX cycle as the target signal, and the resource location of the second signal is determined based on the resource location of the target signal. Unnecessary sending occasions of the second signal may be reduced, thereby reducing device power consumption while taking into account transmission efficiency.

The above embodiment describes a solution of determining a resource location of one second signal based on a resource location of a target signal. The following describes a solution for determining resource locations of multiple second signals based on a resource location of a target signal.

Determining resource locations of multiple second signals based on a resource location of a target signal according to an embodiment of the present application includes the following embodiments.

Embodiment 1: determining the resource locations of multiple second signals based on the resource location of the target signal includes:
determining a resource location of a first signal window based on the resource location of the target signal, where the first signal window includes multiple second signals.

In any one of the embodiments of the present application, the network device may determine the resource location of the first signal window based on the resource location of the target signal, and the first signal window includes multiple second signals.

In any one of the embodiments of the present application, determining the resource location of the first signal window based on the resource location of the target signal includes:

determining a starting resource location of the first signal window based on the resource location of the target signal and a second offset; and

determining the resource locations of the multiple second signals in the first signal window based on the starting resource location of the first signal window and a second parameter, where the second parameter is used to indicate absolute locations of the multiple second signals in the first signal window or offsets of the multiple second signals relative to the starting resource location of the first signal window.

In any one of the embodiments of the present application, the network device determines the starting resource location of the first signal window based on the resource location of the target signal and the second offset.

The second offset is used to determine the starting resource location of the first signal window.

For example, the gNB determines the resource location of the first signal window based on one SSB among N SSBs and the second offset. In any one of the embodiments of the present application, the gNB determines the starting resource location of the second signal window based on an (N-1)-th (the last) SSB among N SSBs and the second offset.

Further, the network device determines the resource locations of the multiple second signals based on the resource location of the first signal window. In any one of the embodiments of the present application, the resource locations of the multiple second signals in the first signal window are determined based on the starting resource location of the first signal window and the second parameter, where the second parameter is used to indicate absolute locations of the multiple second signals in the first signal window or offsets of the multiple second signals relative to the starting resource location of the first signal window.

In any one of the embodiments of the present application, the network device determines the resource location of each second signal based on the starting resource location of the first signal window and the absolute location of each second signal in the first signal window or the offset of each second signal relative to the starting resource location of the first signal window.

Embodiment 2: determining the resource locations of multiple second signals based on the resource location of the target signal includes:

determining a resource location of a first second signal among the multiple second signals based on the resource location of the target signal; and

determining resource locations of other second signals among the multiple second signals based on the resource location of the first second signal among the multiple second signals.

In any one of the embodiments of the present application, the network device determines the resource location of the first second signal among the multiple second signals based on the resource location of the target signal and a fourth offset.

In any one of the embodiments of the present application, the resource locations of other second signals may be determined by the resource location of the first second signal and the relative locations of other second signals and the first second signal.

For example, the gNB determines the resource location of the first second signal among multiple second signals based on one SSB among N SSBs and an offset. For example, the gNB determines the resource location of the first second signal among multiple second signals based on an (N-1)-th (the last) SSB among N SSBs and an offset. The resource locations of other second signals are determined by the resource location of the first second signal and relative locations of each of the other second signals and the first second signal.

Embodiment 3: determining the resource locations of multiple second signals based on the resource location of the target signal includes:
determining a resource location of each second signal among the multiple second signals based on the resource location of the target signal and a third offset, where the third offset includes multiple offsets.

It should be noted that the third offset includes an offset of a resource location of each second signal among the multiple second signals relative to the target signal.

For example, the gNB determines the resource location of each second signal among the multiple second signals based on an (N-1)-th (the last) SSB among the N SSBs and the offset corresponding to each second signal among the multiple second signals.

In the method for resource location determination provided by the embodiment of the present application, the first DRX cycle is determined, and the resource locations of multiple second signals are determined based on the resource location of the target signal. Unnecessary sending occasions of the second signal are reduced, thereby reducing the device power consumption while taking into account transmission efficiency.

An embodiment of the present application further provides a method for determining a resource location of one or more second signals, that is, determining a resource location of one or more second signals based on a period of a first signal.

In any one of the embodiments of the present application, determining the resource location of the one or more second signals based on the period of the first signal includes:

determining a third parameter based on the period of the first signal; and
determining a resource location corresponding to the one or more second signals based on the third parameter.

The third parameter is used to indicate a quantity of second signals or a quantity of radio frames corresponding to the second signal or a quantity of second signal sets or a quantity of radio frames corresponding to a second signal set in the first DRX cycle, where the second signal set includes the one or more second signals.

In any one of the embodiments of the present application, a value of the third parameter is associated with the period of the first signal. For example, the third parameter is denoted as M, where M = T_NetPS/SSB period, or M = floor (T_NetPS/SSB period), where floor () represents rounding down.

In any one of the embodiments of the present application, determining the resource location corresponding to the one or more second signals based on the third parameter includes:

determining a radio frame number corresponding to the second signal or a radio frame number corresponding to the second signal set based on the third parameter; and

determining the resource location corresponding to the one or more second signals based on the radio frame number corresponding to the second signal or the radio frame number corresponding to the second signal set and a fourth parameter.

In any one of the embodiments of the present application, the network device determining the radio frame number corresponding to the second signal or the radio frame number corresponding to the second signal set based on the third parameter satisfies the following formula:

$$(\text{SFN+offset2}) \bmod \text{T\_NetPS} = (\text{T\_NetPS div third parameter}) * (\text{UE\_ID mod third parameter})$$

where SFN is the radio frame number corresponding to the second signal or the radio frame number corresponding to the second signal set, and offset2 is the offset configured by the system message.

In any one of the embodiments of the present application, the fourth parameter is used to indicate an offset of the second signal relative to the radio frame number corresponding to the second signal.

In any one of the embodiments of the present application, the fourth parameter is used to indicate offsets of multiple second signals in the second signal set relative to the radio frame number corresponding to the second signal set.

At this time, the fourth parameter includes multiple offsets, and the second signal set includes multiple second signals.

In any one of the embodiments of the present application, the network device calculates a sequence number of a second signal in the second signal set, and determines the resource location of the second signal based on the radio frame number corresponding to the second signal set and the offset corresponding to the sequence number in multiple offsets in the fourth parameter.

In any one of the embodiments of the present application, the network device may determine the sequence number of the second signal in the second signal set by the following formula:

i_s = floor (UE_ID/third parameter) mod the quantity of second signals contained in the second signal set.

The resource location of the PO/the PF is determined based on a third parameter (for example, the quantity of radio frames corresponding to the second signal in the first DRX cycle). The value of the third parameter is related to the SSB period, so that when the SSB period is extended, the value of the third parameter decreases. At this time, the quantity of radio frames corresponding to the second signal in the first DRX cycle is reduced, thereby reducing unnecessary sending occasions of the second signal, and reducing the power consumption of the network device.

In the method for resource location determination provided by the embodiment of the present application, the resource location of the one or more second signals is determined based on the period of the first signal, so that the resource location of the second signal can follow a periodic change of the first signal. By changing the period of the first signal to reduce unnecessary sending occasions of the second signal, the device power consumption may be further reduced.

In any one of the embodiments of the present application, determining the resource location of the one or more second signals includes:

determining a resource location of a first target second signal in a third DRX cycle, and determining a resource location of a second target second signal in a fourth DRX cycle, where a relative location or a sequence number of the resource location of the first target second signal in the third DRX cycle is different from a relative location or a sequence number of the resource location of the second target second signal in the fourth DRX cycle,

where the third DRX cycle and the fourth DRX cycle are different first DRX cycles.

It should be noted that the first target second signal and the second target second signal are two different second signals.

The network device may adopt the method described in the aforementioned embodiments for determining the resource location of the first target second signal in the third DRX cycle, which will not be repeated here.

The network device may adopt the method described in the aforementioned embodiments for determining the resource location of the second target second signal in the fourth DRX cycle, which will not be repeated here.

A relative location or a sequence number of the resource location of the first target second signal in the third DRX cycle is different from a relative location or a sequence number of the resource location of the second target second signal in the fourth DRX cycle.

In the method for resource location determination provided by the embodiment of the present application, relative resource locations or sequence numbers of the second signal are determined in different third DRX cycles and fourth DRX cycles, thereby reducing the power consumption of the network device and ensuring fairness among multiple UEs.

FIG. 8 is a schematic structural diagram of a terminal device according to an embodiment of the present application. As shown in FIG. 8, the terminal device includes a memory 820, a transceiver 810 and a processor 800.

The memory 820 is used for storing a computer program, the transceiver 810 is used for receiving and sending data under control of the processor 800, and the processor 800 is used for reading the computer program in the memory and performing the following operations:

determining a resource location of one or more second signals based on a resource location and/or a period of a first signal, where the first signal includes a cell-level signal, a broadcast signal, or a public signal.

In any one of the embodiments of the present application, determining the resource location of the one or more second signals based on the resource location of the first signal includes:

determining a target signal, where the target signal is a target first signal among at least one first signal; and

determining the resource location of the one or more second signals based on a resource location of the target signal.

In any one of the embodiments of the present application, the processor is further used for:

determining a first discontinuous reception (DRX) cycle,

where the target signal is a target first signal among at least one first signal in the first DRX cycle.

In any one of the embodiments of the present application, determining the first DRX cycle includes:
determining the first DRX cycle based on the period of the first signal and a second DRX cycle, where the second DRX cycle is a minimum value of a DRX cycle of a terminal device configured by a higher layer signaling and a DRX cycle broadcast by a system message.

In any one of the embodiments of the present application, the first DRX cycle is a DRX cycle for determining the resource location of the second signal in case that a network device is in a power-saving state.

In any one of the embodiments of the present application, the first DRX cycle is a larger value of the period of the first signal and a second DRX cycle.

In any one of the embodiments of the present application, determining the target signal includes:

determining the target signal based on a first parameter,

where the first parameter includes at least one of the following:

a quantity of periods of a first signal contained in the first DRX cycle;

a sequence number of a period of a first signal in the first DRX cycle; or

identification information of a terminal device.

In any one of the embodiments of the present application, determining the resource location of one second signal based on the resource location of the target signal includes:
determining the resource location of the one second signals based on the resource location of the target signal and a first offset.

In any one of the embodiments of the present application, determining the resource locations of multiple second signals based on the resource location of the target signal includes:
determining a resource location of a first signal window based on the resource location of the target signal, where the first signal window includes multiple second signals.

In any one of the embodiments of the present application, determining the resource location of the first signal window based on the resource location of the target signal includes:

determining a starting resource location of the first signal window based on the resource location of the target signal and a second offset; and

determining the resource locations of the multiple second signals in the first signal window based on the starting resource location of the first signal window and a second parameter, where the second parameter is used to indicate absolute locations of the multiple second signals in the first signal window or offsets of the multiple second signals relative to the starting resource location of the first signal window.

In any one of the embodiments of the present application, determining the resource locations of multiple second signals based on the resource location of the target signal includes:

determining a resource location of a first second signal among the multiple second signals based on the resource location of the target signal; and
determining resource locations of other second signals among the multiple second signals based on the resource location of the first second signal among the multiple second signals.

In any one of the embodiments of the present application, determining the resource locations of multiple second signals based on the resource location of the target signal includes:
determining a resource location of each second signal among the multiple second signals based on the resource location of the target signal and a third offset, where the third offset includes multiple offsets.

In any one of the embodiments of the present application, determining the resource location of the one or more second signals based on the period of the first signal includes:

determining a third parameter based on the period of the first signal, where the third parameter is used to indicate a quantity of second signals or a quantity of radio frames corresponding to the second signal or a quantity of second signal sets or a quantity of radio frames corresponding to a second signal set in the first DRX cycle, where the second signal set includes the one or more second signals; and

determining a resource location corresponding to the one or more second signals based on the third parameter.

In any one of the embodiments of the present application, determining the resource location corresponding to the one or more second signals based on the third parameter includes:

determining a radio frame number corresponding to the second signal or a radio frame number corresponding to the second signal set based on the third parameter; and

determining the resource location corresponding to the one or more second signals based on the radio frame number corresponding to the second signal or the radio frame number corresponding to the second signal set and a fourth parameter, where the fourth parameter is used to indicate an offset of the second signal relative to the radio frame number corresponding to the second signal, or to indicate offsets of multiple second signals among the second signal set relative to the radio frame number corresponding to the second signal set.

In any one of the embodiments of the present application, a resource location of a second signal determined by a first version terminal device is a first resource location, the first resource location is different from a second resource location, and the second resource location is a resource location of a second signal determined by a second version terminal device.

In any one of the embodiments of the present application, determining the resource location of the one or more second signals includes:

determining a resource location of a first target second signal in a third DRX cycle, and determining a resource location of a second target second signal in a fourth DRX cycle, where a relative location or a sequence number of the resource location of the first target second signal in the third DRX cycle is different from a relative location or a sequence number of the resource location of the second target second signal in the fourth DRX cycle,

where the third DRX cycle and the fourth DRX cycle are different first DRX cycles.

In any one of the embodiments of the present application, the processor is further used for performing one of the following:

sending the one or more second signals at a resource location of the one or more second signals; or

receiving the one or more second signals at resource locations of the one or more second signals.

In any one of the embodiments of the present application, the second signal includes at least one of the following: a paging physical downlink control channel (PDCCH), paging downlink control information (DCI), a paging physical downlink shared channel (PDSCH), or a random access channel (RACH) occasion.

The transceiver 810 is used for receiving and sending data under the control of the processor 800. In FIG. 8, a bus architecture may include any number of interconnected buses and bridges, which are linked together through various circuits of one or more processors represented by the processor 800 and one or more memories represented by the memory 820. The bus architecture may also link together various other circuits, such as peripherals, voltage regulators, and power management circuits, etc., which are well known in the art, and therefore are not further described in the present application. The bus interface provides an interface. The transceiver 810 may include multiple elements, i.e., including a transmitter and a receiver, units for providing communication with various other devices over transmission media including wireless channels, wired channels, fiber optic cables, and the like. The processor 800 is responsible for managing the bus architecture and general processing, and the memory 820 may store data used by the processor 800 when performing operations. The processor 800 may be a central processing unit (CPU), an application specific integrated circuit (ASIC), a field programmable gate array (FPGA) or a complex programmable logic device (CPLD), and the processor 800 may also adopt a multi-core architecture. The processor 800 calls the computer program stored in the memory 820 to perform any one of the methods provided by the embodiments of the present application according to an obtained executable instruction. The processor 800 and the memory 820 may also be arranged physically separately.

The terminal device further includes a user interface 830. For different user devices, the user interface may further be an interface that may be connected to required devices externally or internally. The connected devices include but are not limited to a small keyboard, a display, a speaker, a microphone, a joystick, etc.

It should be noted here that the above-mentioned terminal device provided by the embodiment of the present application can implement all the method steps implemented in the above-mentioned method embodiments and can achieve the same effect. The parts and beneficial effects of the embodiment that are the same as those of the method embodiments are not described in detail here.

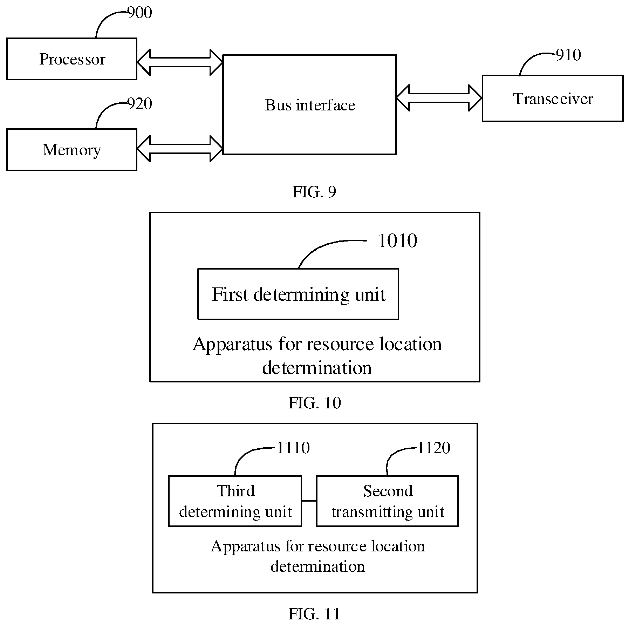

FIG. 9 is a schematic structural diagram of a network device according to an embodiment of the present application. As shown in FIG. 9, the network device includes a memory 920, a transceiver 910 and a processor 900.

The memory 920 is used for storing a computer program, the transceiver 910 is used for receiving and sending data under control of the processor 900, and the processor 900 is used for reading the computer program in the memory and performing all method steps performed by the aforementioned network device side method embodiments.

The transceiver 910 is used for receiving and sending data under the control of the processor 900. In FIG. 9, a bus architecture may include any number of interconnected buses and bridges, which are linked together through various circuits of one or more processors represented by the processor 900 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 910 may include multiple elements, i.e., including a transmitter and a receiver, units for providing communication with various other devices over transmission media including wireless channels, wired channels, fiber optic cables, and the like. The processor 900 is responsible for managing the bus architecture and general processing, and the memory 920 may store data used by the processor 900 when performing operations. The processor 900 may be a central processing unit (CPU), an application specific integrated circuit (ASIC), a field programmable gate array (FPGA) or a complex programmable logic device (CPLD), and the processor 900 may also adopt a multi-core architecture. The processor 900 calls the computer program stored in the memory 920 to perform any one of the methods provided by the embodiments of the present application according to an obtained executable instruction. The processor 900 and the memory 920 may also be arranged physically separately.

It should be noted here that the above-mentioned network device provided by the embodiment of the present application can implement all the method steps implemented in the above-mentioned method embodiments and can achieve the same effect. The parts and beneficial effects of the embodiment that are the same as those of the method embodiments are not described in detail here.

FIG. 10 is a first schematic structural diagram of an apparatus for resource location determination according to an embodiment of the present application. As shown in FIG. 10, the apparatus for resource location determination includes: a first determining unit 1010, used for determining a resource location of one or more second signals based on a resource location and/or a period of a first signal, where the first signal includes a cell-level signal, a broadcast signal, or a public signal.

In any one of the embodiments of the present application, determining the resource location of the one or more second signals based on the resource location of the first signal includes:

determining a target signal, where the target signal is a target first signal among at least one first signal; and

determining the resource location of the one or more second signals based on a resource location of the target signal.

In any one of the embodiments of the present application, the apparatus further includes:

a second determining unit, used for determining a first discontinuous reception (DRX) cycle,

where the target signal is a target first signal among at least one first signal in the first DRX cycle.

In any one of the embodiments of the present application, determining the first DRX cycle includes: determining the first DRX cycle based on the period of the first signal and a second DRX cycle, where the second DRX cycle is a minimum value of a DRX cycle of a terminal device configured by a higher layer signaling and a DRX cycle broadcast by a system message.

In any one of the embodiments of the present application, the first DRX cycle is a DRX cycle for determining the resource location of the second signal in case that a network device is in a power-saving state.

In any one of the embodiments of the present application, the first DRX cycle is a larger value of the period of the first signal and a second DRX cycle.

In any one of the embodiments of the present application, determining the target signal includes:

determining the target signal based on a first parameter,

where the first parameter includes at least one of the following:

a quantity of periods of a first signal contained in the first DRX cycle;

a sequence number of a period of a first signal in the first DRX cycle; or

identification information of a terminal device.

In any one of the embodiments of the present application, determining the resource location of one second signal based on the resource location of the target signal includes: determining the resource location of the one second signals based on the resource location of the target signal and a first offset.

In any one of the embodiments of the present application, determining the resource locations of multiple second signals based on the resource location of the target signal includes: determining a resource location of a first signal window based on the resource location of the target signal, where the first signal window includes multiple second signals.

In any one of the embodiments of the present application, determining the resource location of the first signal window based on the resource location of the target signal includes:

determining a starting resource location of the first signal window based on the resource location of the target signal and a second offset; and

determining the resource locations of the multiple second signals in the first signal window based on the starting resource location of the first signal window and a second parameter, where the second parameter is used to indicate absolute locations of the multiple second signals in the first signal window or offsets of the multiple second signals relative to the starting resource location of the first signal window.

In any one of the embodiments of the present application, determining the resource locations of multiple second signals based on the resource location of the target signal includes:

determining a resource location of a first second signal among the multiple second signals based on the resource location of the target signal; and

determining resource locations of other second signals among the multiple second signals based on the resource location of the first second signal among the multiple second signals.

In any one of the embodiments of the present application, determining the resource locations of multiple second signals based on the resource location of the target signal includes:
determining a resource location of each second signal among the multiple second signals based on the resource location of the target signal and a third offset, where the third offset includes multiple offsets.
In any one of the embodiments of the present application, determining the resource location of the one or more second signals based on the period of the first signal includes:

determining a third parameter based on the period of the first signal, where the third parameter is used to indicate a quantity of second signals or a quantity of radio frames corresponding to the second signal or a quantity of second signal sets or a quantity of radio frames corresponding to a second signal set in the first DRX cycle, where the second signal set includes the one or more second signals; and

determining a resource location corresponding to the one or more second signals based on the third parameter.

In any one of the embodiments of the present application, determining the resource locations corresponding to one or more second signals based on the third parameter includes:

determining a radio frame number corresponding to the second signal or a radio frame number corresponding to the second signal set based on the third parameter; and

determining the resource location corresponding to the one or more second signals based on the radio frame number corresponding to the second signal or the radio frame number corresponding to the second signal set and a fourth parameter, where the fourth parameter is used to indicate an offset of the second signal relative to the radio frame number corresponding to the second signal, or to indicate offsets of multiple second signals among the second signal set relative to the radio frame number corresponding to the second signal set.

In any one of the embodiments of the present application, a resource location of a second signal determined by a first version terminal device is a first resource location, the first resource location is different from a second resource location, and the second resource location is a resource location of a second signal determined by a second version terminal device.
In any one of the embodiments of the present application, determining the resource location of the one or more second signals includes:

determining a resource location of a first target second signal in a third DRX cycle, and determining a resource location of a second target second signal in a fourth DRX cycle, where a relative location or a sequence number of the resource location of the first target second signal in the third DRX cycle is different from a relative location or a sequence number of the resource location of the second target second signal in the fourth DRX cycle,

where the third DRX cycle and the fourth DRX cycle are different first DRX cycles.

In any one of the embodiments of the present application, the apparatus further includes a first transmitting unit, used for performing one of the following:

sending the one or more second signals at a resource location of the one or more second signals; or

receiving the one or more second signals at resource locations of the one or more second signals.

In any one of the embodiments of the present application, the second signal includes at least one of the following: a paging physical downlink control channel (PDCCH), paging downlink control information (DCI), a paging physical downlink shared channel (PDSCH), or a random access channel (RACH) occasion.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted that the apparatus for resource location determination provided by the embodiments of the present application may implement all the method steps implemented by the above-mentioned method embodiments, and may achieve the same effect. The parts and beneficial effects of the present embodiment that are the same as those of the method embodiment are not described in detail here.

FIG. 11 is a second schematic structural diagram of an apparatus for resource location determination according to an embodiment of the present application. As shown in FIG. 11, the apparatus for resource location determination includes:

a third determining unit 1110, used for determining a resource location of one or more second signals based on a resource location and/or a period of a first signal, where the first signal includes a cell-level signal, a broadcast signal, or a public signal; and

a second transmitting unit 1120, used for sending the one or more second signals to a terminal device at the resource location of the one or more second signals, or receiving the one or more second signals sent from a terminal device at the resource location of the one or more second signals.

In any one of the embodiments of the present application, determining the resource location of the one or more second signals based on the resource location of the first signal includes:

determining a target signal, where the target signal is a target first signal among at least one first signal; and

determining the resource location of the one or more second signals based on a resource location of the target signal.

In any one of the embodiments of the present application, the apparatus further includes:

a fourth determining unit, used for determining a first DRX cycle corresponding to the terminal device,

where the target signal is a target first signal among at least one first signal in the first DRX cycle.

In any one of the embodiments of the present application, determining the first DRX cycle corresponding to the terminal device includes:
determining the first DRX cycle based on the period of the first signal and a second DRX cycle, where the second DRX cycle is a minimum value of a DRX cycle of the terminal device configured by a higher layer signaling and a DRX cycle broadcast by a system message.

In any one of the embodiments of the present application, the first DRX cycle is a DRX cycle for determining the resource location of the second signal in case that a network device is in a power-saving state.

In any one of the embodiments of the present application, the first DRX cycle is a larger value of the period of the first signal and a second DRX cycle.

In any one of the embodiments of the present application, determining the target signal includes:

determining the target signal based on a first parameter,

where the first parameter includes at least one of the following:

a quantity of periods of a first signal contained in the first DRX cycle;

a sequence number of a period of a first signal in the first DRX cycle; or

identification information of the terminal device.

In any one of the embodiments of the present application, determining the resource location of one second signal based on the resource location of the target signal includes:
determining the resource location of the one second signals based on the resource location of the target signal and a first offset.

In any one of the embodiments of the present application, determining the resource locations of multiple second signals based on the resource location of the target signal includes:
determining a resource location of a first signal window based on the resource location of the target signal, where the first signal window includes multiple second signals.

In any one of the embodiments of the present application, determining the resource location of the first signal window based on the resource location of the target signal includes:

determining a starting resource location of the first signal window based on the resource location of the target signal and a second offset; and

determining the resource locations of the multiple second signals in the first signal window based on the starting resource location of the first signal window and a second parameter, where the second parameter is used to indicate absolute locations of the multiple second signals in the first signal window or offsets of the multiple second signals relative to the starting resource location of the first signal window.

In any one of the embodiments of the present application, determining the resource locations of multiple second signals based on the resource location of the target signal includes:

determining a resource location of a first second signal among the multiple second signals based on the resource location of the target signal; and

determining resource locations of other second signals among the multiple second signals based on the resource location of the first second signal among the multiple second signals.

In any one of the embodiments of the present application, determining the resource locations of multiple second signals based on the resource location of the target signal includes:
determining a resource location of each second signal among the multiple second signals based on the resource location of the target signal and a third offset, where the third offset includes multiple offsets.

In any one of the embodiments of the present application, determining the resource location of the one or more second signals based on the period of the first signal includes:

determining a third parameter based on the period of the first signal, where the third parameter is used to indicate a quantity of second signals or a quantity of radio frames corresponding to the second signal or a quantity of second signal sets or a quantity of radio frames corresponding to a second signal set in the first DRX cycle, where the second signal set includes the one or more second signals; and

determining a resource location corresponding to the one or more second signals based on the third parameter.

In any one of the embodiments of the present application, determining the resource location corresponding to the one or more second signals based on the third parameter includes:

determining a radio frame number corresponding to the second signal or a radio frame number corresponding to the second signal set based on the third parameter; and

determining the resource location corresponding to the one or more second signals based on the radio frame number corresponding to the second signal or the radio frame number corresponding to the second signal set and a fourth parameter, where the fourth parameter is used to indicate an offset of the second signal relative to the radio frame number corresponding to the second signal, or to indicate offsets of multiple second signals among the second signal set relative to the radio frame number corresponding to the second signal set.

In any one of the embodiments of the present application, determining the resource location of the one or more second signals includes:

determining a resource location of a first target second signal in a third DRX cycle, and determining a resource location of a second target second signal in a fourth DRX cycle, where a relative location or a sequence number of the resource location of the first target second signal in the third DRX cycle is different from a relative location or a sequence number of the resource location of the second target second signal in the fourth DRX cycle,

where the third DRX cycle and the fourth DRX cycle are different first DRX cycles.

In any one of the embodiments of the present application, the second signal includes at least one of the following: a paging physical downlink control channel (PDCCH), paging downlink control information (DCI), a paging physical downlink shared channel (PDSCH), or a random access channel (RACH) occasion.

An embodiment of the present application further provides a processor-readable storage medium, the processor-readable storage medium stores a computer program, and the computer program is used to cause a processor to perform any one of the methods provided by the above embodiments and achieve the same effects, which will not be repeated here.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As may be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. In any one of the embodiments of the present application, each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It may be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**EP 4 598 143 A1**

**Claims**

1. A method for resource location determination, performed by a terminal device, comprising:
   determining a resource location of one or more second signals based on a resource location and/or a period of a first signal, wherein the first signal comprises a cell-level signal, a broadcast signal, or a public signal.

2. The method of claim 1, wherein determining the resource location of the one or more second signals based on the resource location of the first signal comprises:

   determining a target signal, wherein the target signal is a target first signal among at least one first signal; and
   determining the resource location of the one or more second signals based on a resource location of the target signal.

3. The method of claim 2, further comprising:

   determining a first discontinuous reception, DRX, cycle,
   wherein the target signal is a target first signal among at least one first signal in the first DRX cycle.

4. The method of claim 3, wherein determining the first DRX cycle comprises:
   determining the first DRX cycle based on the period of the first signal and a second DRX cycle, wherein the second DRX cycle is a minimum value of a DRX cycle of the terminal device configured by a higher layer signaling and a DRX cycle broadcast by a system message.

5. The method of claim 3 or 4, wherein the first DRX cycle is a DRX cycle for determining the resource location of the second signal in case that a network device is in a power-saving state.

6. The method of any one of claims 3 to 5, wherein the first DRX cycle is a larger value of the period of the first signal and a second DRX cycle.

7. The method of any one of claims 3 to 6, wherein determining the target signal comprises:

   determining the target signal based on a first parameter,
   wherein the first parameter comprises at least one of the following:

   a quantity of periods of a first signal contained in the first DRX cycle;
   a sequence number of a period of a first signal in the first DRX cycle; or
   identification information of the terminal device.

8. The method of any one of claims 2 to 7, wherein determining the resource location of one second signal based on the resource location of the target signal comprises:
   determining the resource location of the one second signals based on the resource location of the target signal and a first offset.

9. The method of any one of claims 2 to 7, wherein determining the resource locations of multiple second signals based on the resource location of the target signal comprises:
   determining a resource location of a first signal window based on the resource location of the target signal, wherein the first signal window comprises multiple second signals.

10. The method of claim 9, wherein determining the resource location of the first signal window based on the resource location of the target signal comprises:

    determining a starting resource location of the first signal window based on the resource location of the target signal and a second offset; and
    determining the resource locations of the multiple second signals in the first signal window based on the starting resource location of the first signal window and a second parameter, wherein the second parameter is used to indicate absolute locations of the multiple second signals in the first signal window or offsets of the multiple second signals relative to the starting resource location of the first signal window.

11. The method of any one of claims 2 to 7, wherein determining the resource locations of multiple second signals based on the resource location of the target signal comprises:

> determining a resource location of a first second signal among the multiple second signals based on the resource location of the target signal; and
> determining resource locations of other second signals among the multiple second signals based on the resource location of the first second signal among the multiple second signals.

12. The method of any one of claims 2 to 7, wherein determining the resource locations of multiple second signals based on the resource location of the target signal comprises:
determining a resource location of each second signal among the multiple second signals based on the resource location of the target signal and a third offset, wherein the third offset comprises multiple offsets.

13. The method of any one of claims 3 to 7, wherein determining the resource location of the one or more second signals based on the period of the first signal comprises:

> determining a third parameter based on the period of the first signal, wherein the third parameter is used to indicate a quantity of second signals or a quantity of radio frames corresponding to the second signal or a quantity of second signal sets or a quantity of radio frames corresponding to a second signal set in the first DRX cycle, wherein the second signal set comprises the one or more second signals; and
> determining a resource location corresponding to the one or more second signals based on the third parameter.

14. The method of claim 13, wherein determining the resource location corresponding to the one or more second signals based on the third parameter comprises:

> determining a radio frame number corresponding to the second signal or a radio frame number corresponding to the second signal set based on the third parameter; and
> determining the resource location corresponding to the one or more second signals based on the radio frame number corresponding to the second signal or the radio frame number corresponding to the second signal set and a fourth parameter, wherein the fourth parameter is used to indicate an offset of the second signal relative to the radio frame number corresponding to the second signal, or to indicate offsets of multiple second signals among the second signal set relative to the radio frame number corresponding to the second signal set.

15. The method of any one of claims 1 to 14, wherein a resource location of a second signal determined by a first version terminal device is a first resource location, the first resource location is different from a second resource location, and the second resource location is a resource location of a second signal determined by a second version terminal device.

16. The method of any one of claims 3 to 14, wherein determining the resource location of the one or more second signals comprises:

> determining a resource location of a first target second signal in a third DRX cycle, and determining a resource location of a second target second signal in a fourth DRX cycle, wherein a relative location or a sequence number of the resource location of the first target second signal in the third DRX cycle is different from a relative location or a sequence number of the resource location of the second target second signal in the fourth DRX cycle, wherein the third DRX cycle and the fourth DRX cycle are different first DRX cycles.

17. The method of any one of claims 1 to 16, further comprising one of the following:

> sending the one or more second signals at a resource location of the one or more second signals; or
> receiving the one or more second signals at resource locations of the one or more second signals.

18. The method of any one of claims 1 to 17, wherein the second signal comprises at least one of the following: a paging physical downlink control channel, PDCCH, paging downlink control information, DCI, a paging physical downlink shared channel, PDSCH, or a random access channel, RACH, occasion.

19. A method for resource location determination, performed by a network device, comprising:

determining a resource location of one or more second signals based on a resource location and/or a period of a first signal, wherein the first signal comprises a cell-level signal, a broadcast signal, or a public signal; and sending the one or more second signals to a terminal device at the resource location of the one or more second signals, or receiving the one or more second signals sent from a terminal device at the resource location of the one or more second signals.

20. The method of claim 19, wherein determining the resource location of the one or more second signals based on the resource location of the first signal comprises:

   determining a target signal, wherein the target signal is a target first signal among at least one first signal; and determining the resource location of the one or more second signals based on a resource location of the target signal.

21. The method of claim 20, further comprising:

   determining a first discontinuous reception, DRX, cycle corresponding to the terminal device, wherein the target signal is a target first signal among at least one first signal in the first DRX cycle.

22. The method of claim 21, wherein determining the first DRX cycle corresponding to the terminal device comprises: determining the first DRX cycle based on the period of the first signal and a second DRX cycle, wherein the second DRX cycle is a minimum value of a DRX cycle of the terminal device configured by a higher layer signaling and a DRX cycle broadcast by a system message.

23. The method of claim 21 or 22, wherein the first DRX cycle is a DRX cycle corresponding to a resource location of a second signal determined in case that the network device is in a power-saving state.

24. The method of any one of claims 21 to 23, wherein the first DRX cycle is a larger value of the period of the first signal and a second DRX cycle.

25. The method of any one of claims 21 to 24, wherein determining the target signal comprises:

   determining the target signal based on a first parameter, wherein the first parameter comprises at least one of the following:

      a quantity of periods of a first signal contained in the first DRX cycle;
      a sequence number of a period of a first signal in the first DRX cycle; or
      identification information of the terminal device.

26. The method of any one of claims 20 to 25, wherein determining the resource location of one second signal based on the resource location of the target signal comprises:
determining the resource location of the one second signals based on the resource location of the target signal and a first offset.

27. The method of any one of claims 20 to 25, wherein determining the resource locations of multiple second signals based on the resource location of the target signal comprises:
determining a resource location of a first signal window based on the resource location of the target signal, wherein the first signal window comprises multiple second signals.

28. The method of claim 27, wherein determining the resource location of the first signal window based on the resource location of the target signal comprises:

   determining a starting resource location of the first signal window based on the resource location of the target signal and a second offset; and
   determining the resource locations of the multiple second signals in the first signal window based on the starting resource location of the first signal window and a second parameter, wherein the second parameter is used to indicate absolute locations of the multiple second signals in the first signal window or offsets of the multiple second signals relative to the starting resource location of the first signal window.

29. The method of any one of claims 20 to 25, wherein determining the resource locations of multiple second signals based on the resource location of the target signal comprises:

determining a resource location of a first second signal among the multiple second signals based on the resource location of the target signal; and
determining resource locations of other second signals among the multiple second signals based on the resource location of the first second signal among the multiple second signals.

30. The method of any one of claims 20 to 25, wherein determining the resource locations of multiple second signals based on the resource location of the target signal comprises:
determining a resource location of each second signal among the multiple second signals based on the resource location of the target signal and a third offset, wherein the third offset comprises multiple offsets.

31. The method of any one of claims 21 to 25, wherein determining the resource location of the one or more second signals based on the period of the first signal comprises:

determining a third parameter based on the period of the first signal, wherein the third parameter is used to indicate a quantity of second signals or a quantity of radio frames corresponding to the second signal or a quantity of second signal sets or a quantity of radio frames corresponding to a second signal set in the first DRX cycle, wherein the second signal set comprises the one or more second signals; and
determining a resource location corresponding to the one or more second signals based on the third parameter.

32. The method of claim 31, wherein determining the resource location corresponding to the one or more second signals based on the third parameter comprises:

determining a radio frame number corresponding to the second signal or a radio frame number corresponding to the second signal set based on the third parameter; and
determining the resource location corresponding to the one or more second signals based on the radio frame number corresponding to the second signal or the radio frame number corresponding to the second signal set and a fourth parameter, wherein the fourth parameter is used to indicate an offset of the second signal relative to the radio frame number corresponding to the second signal, or to indicate offsets of multiple second signals among the second signal set relative to the radio frame number corresponding to the second signal set.

33. The method of any one of claims 21 to 32, wherein determining the resource location of the one or more second signals comprises:

determining a resource location of a first target second signal in a third DRX cycle, and determining a resource location of a second target second signal in a fourth DRX cycle, wherein a relative location or a sequence number of the resource location of the first target second signal in the third DRX cycle is different from a relative location or a sequence number of the resource location of the second target second signal in the fourth DRX cycle, wherein the third DRX cycle and the fourth DRX cycle are different first DRX cycles.

34. The method of any one of claims 19 to 33, wherein the second signal comprises at least one of the following: a paging physical downlink control channel, PDCCH, paging downlink control information, DCI, a paging physical downlink shared channel, PDSCH, or a random access channel, RACH, occasion.

35. A terminal device, comprising a memory, a transceiver and a processor,
wherein the memory is used for storing a computer program, the transceiver is used for receiving and sending data under control of the processor, and the processor is used for reading the computer program in the memory and performing the method of any one of claims 1 to 18.

36. A network device, comprising a memory, a transceiver and a processor,
wherein the memory is used for storing a computer program, the transceiver is used for receiving and sending data under control of the processor, and the processor is used for reading the computer program in the memory and performing the method of any one of claims 19 to 34.

37. An apparatus for resource location determination, comprising:
a first determining unit, used for determining a resource location of one or more second signals based on a resource location and/or a period of a first signal, wherein the first signal comprises a cell-level signal, a broadcast signal, or a public signal.

38. The apparatus of claim 37, wherein the first determining unit is used for:

determining a target signal, wherein the target signal is a target first signal among at least one first signal; and determining the resource location of the one or more second signals based on a resource location of the target signal.

39. The apparatus of claim 38, further comprising:

a second determining unit, used for determining a first discontinuous reception, DRX, cycle, wherein the target signal is a target first signal among at least one first signal in the first DRX cycle.

40. The apparatus of claim 39, wherein determining the first DRX cycle comprises:
determining the first DRX cycle based on the period of the first signal and a second DRX cycle, wherein the second DRX cycle is a minimum value of a DRX cycle of a terminal device configured by a higher layer signaling and a DRX cycle broadcast by a system message.

41. The apparatus of claim 39 or 40, wherein the first DRX cycle is a DRX cycle for determining the resource location of the second signal in case that a network device is in a power-saving state.

42. The apparatus of any one of claims 39 to 41, wherein the first DRX cycle is a larger value of the period of the first signal and a second DRX cycle.

43. The apparatus of any one of claims 39 to 42, wherein determining the target signal comprises:

determining the target signal based on a first parameter,
wherein the first parameter comprises at least one of the following:

a quantity of periods of a first signal contained in the first DRX cycle;
a sequence number of a period of a first signal in the first DRX cycle; or
identification information of a terminal device.

44. The apparatus of any one of claims 38 to 43, wherein determining the resource location of one second signal based on the resource location of the target signal comprises:
determining the resource location of the one second signals based on the resource location of the target signal and a first offset.

45. The apparatus of any one of claims 38 to 43, wherein determining the resource locations of multiple second signals based on the resource location of the target signal comprises:
determining a resource location of a first signal window based on the resource location of the target signal, wherein the first signal window comprises multiple second signals.

46. The apparatus of claim 45, wherein determining the resource location of the first signal window based on the resource location of the target signal comprises:

determining a starting resource location of the first signal window based on the resource location of the target signal and a second offset; and
determining the resource locations of the multiple second signals in the first signal window based on the starting resource location of the first signal window and a second parameter, wherein the second parameter is used to indicate absolute locations of the multiple second signals in the first signal window or offsets of the multiple second signals relative to the starting resource location of the first signal window.

47. The apparatus of any one of claims 38 to 43, wherein determining the resource locations of multiple second signals based on the resource location of the target signal comprises:

determining a resource location of a first second signal among the multiple second signals based on the resource location of the target signal; and

determining resource locations of other second signals among the multiple second signals based on the resource location of the first second signal among the multiple second signals.

48. The apparatus of any one of claims 38 to 43, wherein determining the resource locations of multiple second signals based on the resource location of the target signal comprises:
determining a resource location of each second signal among the multiple second signals based on the resource location of the target signal and a third offset, wherein the third offset comprises multiple offsets.

49. The apparatus of any one of claims 39 to 43, wherein determining the resource location of the one or more second signals based on the period of the first signal comprises:

determining a third parameter based on the period of the first signal, wherein the third parameter is used to indicate a quantity of second signals or a quantity of radio frames corresponding to the second signal or a quantity of second signal sets or a quantity of radio frames corresponding to a second signal set in the first DRX cycle, wherein the second signal set comprises the one or more second signals; and
determining a resource location corresponding to the one or more second signals based on the third parameter.

50. The apparatus of claim 49, wherein determining the resource locations corresponding to one or more second signals based on the third parameter comprises:

determining a radio frame number corresponding to the second signal or a radio frame number corresponding to the second signal set based on the third parameter; and
determining the resource location corresponding to the one or more second signals based on the radio frame number corresponding to the second signal or the radio frame number corresponding to the second signal set and a fourth parameter, wherein the fourth parameter is used to indicate an offset of the second signal relative to the radio frame number corresponding to the second signal, or to indicate offsets of multiple second signals among the second signal set relative to the radio frame number corresponding to the second signal set.

51. The apparatus of any one of claims 37 to 50, wherein a resource location of a second signal determined by a first version terminal device is a first resource location, the first resource location is different from a second resource location, and the second resource location is a resource location of a second signal determined by a second version terminal device.

52. The apparatus of any one of claims 39 to 50, wherein determining the resource location of the one or more second signals comprises:
determining a resource location of a first target second signal in a third DRX cycle, and determining a resource location of a second target second signal in a fourth DRX cycle, wherein a relative location or a sequence number of the resource location of the first target second signal in the third DRX cycle is different from a relative location or a sequence number of the resource location of the second target second signal in the fourth DRX cycle.

53. The apparatus of any one of claims 37 to 52, wherein the third DRX cycle and the fourth DRX cycle are different first DRX cycles,
in any one of the embodiments of the present application, the apparatus further comprises a first transmission unit, used for performing one of the following:

sending the one or more second signals at a resource location of the one or more second signals; or
receiving the one or more second signals at resource locations of the one or more second signals.

54. The apparatus of any one of claims 37 to 53, wherein the second signal comprises at least one of the following: a paging physical downlink control channel, PDCCH, paging downlink control information, DCI, a paging physical downlink shared channel, PDSCH, or a random access channel, RACH, occasion.

55. An apparatus for resource location determination, comprising:

a third determining unit, used for determining a resource location of one or more second signals based on a resource location and/or a period of a first signal, wherein the first signal comprises a cell-level signal, a broadcast signal, or a public signal; and

a second transmitting unit, used for sending the one or more second signals to a terminal device at the resource location of the one or more second signals, or receiving the one or more second signals sent from a terminal device at the resource location of the one or more second signals.

56. The apparatus of claim 55, wherein determining the resource location of the one or more second signals based on the resource location of the first signal comprises:

   determining a target signal, wherein the target signal is a target first signal among at least one first signal; and determining the resource location of the one or more second signals based on a resource location of the target signal.

57. The apparatus of claim 56, further comprising:

   a fourth determining unit, used for determining a first discontinuous reception, DRX, cycle corresponding to the terminal device,
   wherein the target signal is a target first signal among at least one first signal in the first DRX cycle.

58. The apparatus of claim 57, wherein determining the first DRX cycle corresponding to the terminal device comprises: determining the first DRX cycle based on the period of the first signal and a second DRX cycle, wherein the second DRX cycle is a minimum value of a DRX cycle of the terminal device configured by a higher layer signaling and a DRX cycle broadcast by a system message.

59. The apparatus of claim 57 or 58, wherein the first DRX cycle is a DRX cycle for determining the resource location of the second signal in case that a network device is in a power-saving state.

60. The apparatus of any one of claims 57 to 59, wherein the first DRX cycle is a larger value of the period of the first signal and a second DRX cycle.

61. The apparatus of any one of claims 57 to 60, wherein determining the target signal comprises:

   determining the target signal based on a first parameter,
   wherein the first parameter comprises at least one of the following:

   a quantity of periods of a first signal contained in the first DRX cycle;
   a sequence number of a period of a first signal in the first DRX cycle; or
   identification information of the terminal device.

62. The apparatus of any one of claims 56 to 61, wherein determining the resource location of one second signal based on the resource location of the target signal comprises:
   determining the resource location of the one second signals based on the resource location of the target signal and a first offset.

63. The apparatus of any one of claims 56 to 61, wherein determining the resource locations of multiple second signals based on the resource location of the target signal comprises:
   determining a resource location of a first signal window based on the resource location of the target signal, wherein the first signal window comprises multiple second signals.

64. The apparatus of claim 63, wherein determining the resource location of the first signal window based on the resource location of the target signal comprises:

   determining a starting resource location of the first signal window based on the resource location of the target signal and a second offset; and
   determining the resource locations of the multiple second signals in the first signal window based on the starting resource location of the first signal window and a second parameter, wherein the second parameter is used to indicate absolute locations of the multiple second signals in the first signal window or offsets of the multiple second signals relative to the starting resource location of the first signal window.

65. The apparatus of any one of claims 56 to 61, wherein determining the resource locations of multiple second signals based on the resource location of the target signal comprises:

determining a resource location of a first second signal among the multiple second signals based on the resource location of the target signal; and

determining resource locations of other second signals among the multiple second signals based on the resource location of the first second signal among the multiple second signals.

66. The apparatus of any one of claims 56 to 61, wherein determining the resource locations of multiple second signals based on the resource location of the target signal comprises:

determining a resource location of each second signal among the multiple second signals based on the resource location of the target signal and a third offset, wherein the third offset comprises multiple offsets.

67. The apparatus of any one of claims 57 to 61, wherein determining the resource location of the one or more second signals based on the period of the first signal comprises:

determining a third parameter based on the period of the first signal, wherein the third parameter is used to indicate a quantity of second signals or a quantity of radio frames corresponding to the second signal or a quantity of second signal sets or a quantity of radio frames corresponding to a second signal set in the first DRX cycle, wherein the second signal set comprises the one or more second signals; and

determining a resource location corresponding to the one or more second signals based on the third parameter.

68. The apparatus of claim 67, wherein determining the resource location corresponding to the one or more second signals based on the third parameter comprises:

determining a radio frame number corresponding to the second signal or a radio frame number corresponding to the second signal set based on the third parameter; and

determining the resource location corresponding to the one or more second signals based on the radio frame number corresponding to the second signal or the radio frame number corresponding to the second signal set and a fourth parameter, wherein the fourth parameter is used to indicate an offset of the second signal relative to the radio frame number corresponding to the second signal, or to indicate offsets of multiple second signals among the second signal set relative to the radio frame number corresponding to the second signal set.

69. The apparatus of any one of claims 57 to 68, wherein determining the resource location of the one or more second signals comprises:

determining a resource location of a first target second signal in a third DRX cycle, and determining a resource location of a second target second signal in a fourth DRX cycle, wherein a relative location or a sequence number of the resource location of the first target second signal in the third DRX cycle is different from a relative location or a sequence number of the resource location of the second target second signal in the fourth DRX cycle, wherein the third DRX cycle and the fourth DRX cycle are different first DRX cycles.

70. The apparatus of any one of claims 55 to 69, wherein the second signal comprises at least one of the following: a paging physical downlink control channel, PDCCH, paging downlink control information, DCI, a paging physical downlink shared channel, PDSCH, or a random access channel, RACH, occasion.

71. A processor-readable storage medium, wherein the processor-readable storage medium stores a computer program, and the computer program is used to cause a processor to perform the method of any one of claims 1 to 18, or the method of any one of claims 19 to 34.

Start

Determining a resource location of one or more second signals based on a resource location and/or a cycle of a first signal, where the first signal includes a cell-level signal, a broadcast signal, or a public signal

100

End

FIG. 1

SSB     PO

T_NetPS

SSB period

offset

N

PO1        PO2        PO1        PO2

FIG. 2

FIG. 3

FIG. 4

FIG. 5

T_NetPS

← SSB period →

⊞ SSB    ▨ PO

UE 1    UE 2                    UE 2    UE 1

FIG. 6

Determining a resource location of one or more second signals based on a resource location and/or a cycle of a first signal, where the first signal includes a cell-level signal, a broadcast signal, or a public signal    700

Sending the one or more second signals to a terminal device at the resource location of the one or more second signals, or receiving the one or more second signals sent from a terminal device at the resource location of the one or more second signals    701

FIG. 7

800

Processor

820

Memory

Bus interface

810

Transceiver

830

User interface

FIG. 8

900

Processor

910

Bus interface

Transceiver

920

Memory

FIG. 9

1010

First determining unit

Apparatus for resource location
determination

FIG. 10

1110

Third
determining unit

1120

Second
transmitting unit

Apparatus for resource location
determination

FIG. 11

# INTERNATIONAL SEARCH REPORT

| International application No. |
|---|
| **PCT/CN2023/121618** |

| A. | CLASSIFICATION OF SUBJECT MATTER |
|---|---|

H04W52/02(2009.01)i

According to International Patent Classification (IPC) or to both national classification and IPC

| B. | FIELDS SEARCHED |
|---|---|

Minimum documentation searched (classification system followed by classification symbols)

    IPC: H04W H04L

Documentation searched other than minimum documentation to the extent that such documents are included in the fields searched

Electronic data base consulted during the international search (name of data base and, where practicable, search terms used)

    WPABSC, CNTXT, VCN, VEN, ENTXT, CJFD, 3GPP: 寻呼, 下行控制信息, 资源, 位置, 信号, 周期, 广播, 同步信号, 非连续接收, 节能, 偏置, 目标, 帧, 信号集合, paging, downlink control information, DCI, resource, location, signal, period, broadcast, synchronization signal, discontinuous reception, DRX, energy saving, offset, target, frame, signal set

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110741664 A (HUAWEI TECHNOLOGIES CO., LTD.) 31 January 2020 (2020-01-31) description, paragraphs 0071-0175 | 1-3, 8-11, 17-21, 26-29, 34-39, 44-47, 53-57, 62-65, 70, 71 |
| X | CN 110876185 A (RESEARCH INSTITUTE OF CHINA MOBILE COMMUNICATIONS CORPORATION et al.) 10 March 2020 (2020-03-10) description, paragraphs 236-612 | 1-3, 8-11, 17-21, 26-29, 34-39, 44-47, 53-57, 62-65, 70, 71 |
| A | CN 110710285 A (HUAWEI TECHNOLOGIES CO., LTD.) 17 January 2020 (2020-01-17) entire document | 1-71 |
| A | CN 112534886 A (OPPO GUANGDONG MOBILE TELECOMMUNICATIONS CORP., LTD.) 19 March 2021 (2021-03-19) entire document | 1-71 |
| A | US 2022303901 A1 (DATANG MOBILE COMMUNICATIONS EQUIPMENT CO., LTD.) 22 September 2022 (2022-09-22) entire document | 1-71 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 December 2023** | **27 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/121618** |

**C.**     **DOCUMENTS CONSIDERED TO BE RELEVANT**

| Category* | Citation of document, with indication, where appropriate, of the relevant passages | Relevant to claim No. |
| --- | --- | --- |
| A | WO 2020222619 A1 (LG ELECTRONICS INC.) 05 November 2020 (2020-11-05)<br>entire document | 1-71 |

**INTERNATIONAL SEARCH REPORT**
Information on patent family members

International application No.

**PCT/CN2023/121618**

| Patent document cited in search report | | | Publication date (day/month/year) | Patent family member(s) | | | Publication date (day/month/year) |
|---|---|---|---|---|---|---|---|
| CN | 110741664 | A | 31 January 2020 | WO | 2019028887 | A1 | 14 February 2019 |
| | | | | US | 2020178254 | A1 | 04 June 2020 |
| | | | | EP | 3664493 | A1 | 10 June 2020 |
| | | | | EP | 3664493 | A4 | 29 July 2020 |
| | | | | EP | 3664493 | B1 | 13 July 2022 |
| CN | 110876185 | A | 10 March 2020 | US | 2021337471 | A1 | 28 October 2021 |
| | | | | US | 11711765 | B2 | 25 July 2023 |
| | | | | AU | 2019331959 | A1 | 06 May 2021 |
| | | | | AU | 2019331959 | B2 | 29 September 2022 |
| | | | | AU | 2019331959 | C1 | 06 April 2023 |
| | | | | SG | 11202102027 | QA | 30 March 2021 |
| | | | | EP | 3846549 | A1 | 07 July 2021 |
| | | | | EP | 3846549 | A4 | 27 April 2022 |
| | | | | CA | 3110929 | A1 | 05 March 2020 |
| | | | | CA | 3110929 | C | 26 September 2023 |
| | | | | JP | 2021536185 | A | 23 December 2021 |
| | | | | JP | 7206373 | B2 | 17 January 2023 |
| CN | 110710285 | A | 17 January 2020 | CA | 3065623 | A1 | 06 December 2018 |
| | | | | CA | 3065623 | C | 05 September 2023 |
| | | | | WO | 2018218687 | A1 | 06 December 2018 |
| | | | | BR | 112019025413 | A2 | 23 June 2020 |
| | | | | EP | 3634050 | A1 | 08 April 2020 |
| | | | | EP | 3634050 | A4 | 06 May 2020 |
| | | | | KR | 20200008619 | A | 28 January 2020 |
| | | | | KR | 102256448 | B1 | 25 May 2021 |
| | | | | JP | 2020522929 | A | 30 July 2020 |
| | | | | JP | 6910475 | B2 | 28 July 2021 |
| | | | | US | 2020107294 | A1 | 02 April 2020 |
| | | | | US | 11445472 | B2 | 13 September 2022 |
| CN | 112534886 | A | 19 March 2021 | KR | 20210038955 | A | 08 April 2021 |
| | | | | WO | 2020025061 | A1 | 06 February 2020 |
| | | | | EP | 3833114 | A1 | 09 June 2021 |
| | | | | EP | 3833114 | A4 | 01 September 2021 |
| | | | | US | 2021159961 | A1 | 27 May 2021 |
| | | | | AU | 2019314754 | A1 | 18 March 2021 |
| | | | | TW | 202008766 | A | 16 February 2020 |
| | | | | JP | 2021533628 | A | 02 December 2021 |
| US | 2022303901 | A1 | 22 September 2022 | WO | 2021017603 | A1 | 04 February 2021 |
| | | | | EP | 4009711 | A1 | 08 June 2022 |
| | | | | EP | 4009711 | A4 | 14 September 2022 |
| | | | | KR | 20220038425 | A | 28 March 2022 |
| WO | 2020222619 | A1 | 05 November 2020 | MX | 2021013283 | A | 24 January 2022 |
| | | | | US | 2022224498 | A1 | 14 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211217058